# EUROPÄISCHE PATENTSCHRIFT

(11) **EP 2 087 394 B1**
(45) Veröffentlichungstag und Bekanntmachung des Hinweises auf die Patenterteilung: **14.12.2011**
(21) Anmeldenummer: 07818752.3
(22) Anmeldetag: 05.10.2007
(51) Int. Cl.: G02B 27/09

(54) **VORRICHTUNG ZUR HOMOGENISIERUNG VON STRAHLUNG MIT NICHT REGELMÄSSIGEN MIKROLINSENARRAYS**
DEVICE FOR HOMOGENIZING RADIATION BY MEANS OF IRREGULAR MICROLENS ARRAYS
DISPOSITIF D'HOMOGÉNÉISATION DE RAYONNEMENTS AU MOYEN DE RÉSEAUX DE MICROLENTILLES IRRÉGULIÈRES

(30) Priorität: 10.10.2006 DE 102006047941
(43) Veröffentlichungstag der Anmeldung: 12.08.2009
(73) Patentinhaber: Fraunhofer-Gesellschaft zur Förderung der angewandten Forschung e.V., 80686 München (DE)
(72) Erfinder: WIPPERMANN, Frank, 07743 Jena (DE); BRÄUER, Andreas, 07646 Schlöben (DE); SCHREIBER, Peter, 07749 Jena (DE)
(74) Vertreter: Pfenning, Meinig & Partner GbR
(86) Internationale Anmeldenummer: PCT/EP2007/008676
(87) Internationale Veröffentlichungsnummer: WO 2008/043491

(56) Entgegenhaltungen:
- WO-A-03/048839
- WO-A-2006/023180
- US-A- 4 912 331
- US-A- 6 069 739
- US-A1- 2006 209 310
- CHRISTOPHE KOPP ET AL: "Efficient beamshaper homogenizer design combining diffractive optical elements, microlens array and random phase plate" JOURNAL OF OPTICS. A, PURE AND APPLIED OPTICS, INSTITUTE OF PHYSICS PUBLISHING, BRISTOL,, GB, Bd. 1, Nr. 3, 1. Mai 1999 (1999-05-01), Seiten 398-403, XP020081229 ISSN: 1464-4258
- SCHREIBER P ET AL: "Homogeneous LED-illumination using microlens arrays" PROCEEDINGS OF THE SPIE, SPIE, BELLINGHAM, VA, US, Bd. 5942, 20. August 2005 (2005-08-20), Seiten 1-9, XP002429677 ISSN: 0277-786X

## Beschreibung

Die Erfindung betrifft eine Vorrichtung zur Homogenisierung von Strahlung, vorzugsweise Licht, unter Verwendung gechirpter Mikrolinsenarrays (cMLA). Gechirpte Mikrolinsenarrays sind anders als die etablierten regulären Mikrolinsenarrays (rMLA) eine Anordnung von nicht identischen Linsen in einem Array. Nicht identisch bedeutet, dass die Parameter der Linsen des Arrays, wie z.B. der Krümmungsradius, der freie Durchmesser, Vertexposition und andere von Linse zu Linse oder Zelle zu Zelle variieren können. Die Parameter jeder Linse bzw. Zelle können durch Funktionen ermittelt werden (analytisch, numerisch), wobei die Funktionen vorzugsweise von der Position der Zelle oder der Linse im Array abhängig sind.

Nach dem Stand der Technik existieren eine Reihe von Möglichkeiten, Licht zu homogenisieren. So ist z.B. die Verwendung eines refraktiven Strahlformelements bekannt. Hierbei lenkt ein in der Oberflächenform angepasstes refraktives Element Anteile der einfallenden Strahlung derart um, dass sich in der Homogenisierungsebene die gewünschte Intensitätsverteilung ergibt. Problematisch ist bei derartigen Vorrichtungen, dass eine Änderung der Intensitätsverteilung im Eingang direkt zu einer Änderung der Intensitätsverteilung am Ausgang, d.h. in der Homogenisierungsebene, führt. Dadurch sind derartige Vorrichtungen justagekritisch, d.h. die Einbaulage bezüglich einfallender Strahlung beeinflusst direkt die Ausgangsverteilung. Außerdem haben schon kleine Verunreinigungen einen starken Einfluss auf die Strahlformung. Darüberhinaus sind derartige Vorrichtungen nur zur Homogenisierung von Lichtbündeln mit kleinem Durchmesser (kleiner als 1 mm) geeignet und aufwendig in der Herstellung.

Auch die Verwendung diffraktiver Strahlformelemente bzw. computergenerierter Hologramme (CGH) sind zur Homogenisierung von Strahlung bekannt. Hierbei beugt ein beugendes Phasenelement Leistungsanteile der einfallenden Strahlung derart, dass sich in der Homogenisierungsebene das gewünschte Strahlprofil ergibt. Solche Elemente zeigen infolge der diffraktiven Wirkung eine große Wellenlängenabhängigkeit. Darüberhinaus ist die Effizienz abhängig von der Anzahl der Höhenstufen (Diskretisierung) und das Relief der Oberfläche führt zu einem erhöhten Streulichtanteil.

Im Zusammenhang mit der vorliegenden Erfindung sind vor allem die sog. Flye's Eye Condensor (FEC) von Interesse. Solche Flye's Eye Condensors weisen nach dem Stand der Technik ein reguläres Mikrolinsenarray (rMLA) auf. Die einfallende Strahlung trifft auf dieses Mikrolinsenarray, so dass dessen Linsen die Strahlung fokussieren. Der maximale Winkel der fokussierten Strahlung hängt dabei von der numerischen Apertur (NA) der Linsen ab. Hinter dem Fokus der Linsen laufen einzelne Strahlungsbündel divergent auseinander, wobei der Divergenzwinkel der numerischen Apertur der Linsen entspricht. Im Strahlengang hinter dem Mikrolinsenarray ist nun eine Fourierlinse angeordnet, welche die einzelnen Bündel derart ablenkt, dass die durch die einzelnen Mikrolinsen des Mikrolinsenarrays erzeugten Teilbündel in der Brennebene der Fourierlinse übereinanderliegen. Da alle Leistungsanteile, die durch einzelne Linsen laufen, in der Brennebene auf der gleichen Fläche überlagert werden, wird die Strahlung homogenisiert. Der Grad der Homogenisierung ist dabei abhängig von der Zahl der Einzellinsen. Wird die Anzahl der Einzellinsen hinreichend groß gewählt, so ist die Homogenisierung nahezu unabhängig von der Eingangsintensitätsverteilung. Bedingung ist jedoch, dass die numerische Apertur der einfallenden Strahlung maximal jener der Linsen entspricht. Die Ausdehnung der homogen beleuchteten Fläche im Fokus der Fourierlinse wird von der numerischen Apertur der Linsen und der Brennweite der Fourierlinse bestimmt. Die Einhüllenden der Intensitätsverteilungen in der Brennebene der Fourierlinse sind bei Nutzung eines Arrays identischer Linsen (reguläres Array) und einer Einzellinse gleich. Bei Nutzung eines Arrays identischer Linsen treten jedoch zusätzlich Interferenzeffekte auf, die zu einer weiteren Intensitätsmodulation mit Ausprägung von Intensitätsmaxima und Nullstellen der Intensität und damit zu einer Verschlechterung der Homogenität führen.

Insbesondere ist der räumliche Abstand der hierbei auftretenden Intensitätsmaxima umgekehrt proportional zur Breite der Einzellinsen. Das bedeutet, dass die Verwendung kleiner Linsen zu großen Abständen der Intensitätsmaxima und damit zu einer geringeren Homogenität führt. Andererseits führt jedoch auch die Verwendung größerer Linsen zu einer verschlechterten Homogenität und zu einer stärkeren Abhängigkeit der Intensitätsverteilung von der Eingangsintensitätsverteilung bei angenommener konstanter Breite der Eingangsintensitätsverteilung.

Bei der vorstehend genannten Technik tritt immer eine Modulation der Intensitätsverteilung im Fokus der Fourierlinse auf. Das bedeutet, dass die Intensität über die Homogenisierungsfläche gleichmäßigen Schwankungen unterworfen ist und am Rand relativ weich abfällt. Diese Modulation kann vermieden werden, wenn parallel zu dem oben beschriebenen ersten regulären Mikrolinsenarray ein identisches zweites reguläres Mikrolinsenarray angeordnet wird. Im Falle einer Einzellinse wird hierdurch eine sehr homogene Verteilung mit einem steilen Kantenabfall erzielt. Im Falle einer Vielzahl von Linsen (Linsenarrays) treten jedoch die zuvor beschriebenen Interferenzprobleme in gleicher weise zu Tage.

Christophe Kopp et all: "Efficient beamshaper homogenizer design combining diffractive optical elements, microlens array and random phase plate" Journal of Optics, A, Pure and Applied Optics, Institute of Physics Publishing, Bristol, GB, Bd.1, Nr. 3, 1. Mai 1999 (1999-05-01), Seiten 398-403, beschreibt ein Array von diffraktiven optischen Elementen in Verbindung mit einer Random Phase Plate zur Verbesserung der Leistung von Homogenisierungsvorrichtungen. Es wird außerdem eine Laser-Faser-Ankopplung beschrieben.

Schreiber et al." Homogenous LED-Illumination using microlens arrays", Proceedings of the SPIE, SPIE, Bellingham, VA, US, Bd. 5942, 20, August 2005 (2005-08-20), Seiten 1-9, beschreibt zweiseitige Mikrolinsen-Arrays, die durch Polymer auf Glas-Replikation von Reflow-Linsen hergestellt werden. Mit zylindrischen Linsenarrays wurden RGB-Beleuchtungssysteme für rechteckige Bereiche zusammengesetzt.

WO 03/048839 beschreibt ein Verfahren zum homogenisieren eines Strahls elektromagnetischer Strahlung. Der Strahl fällt auf ein erstes Array ablenkender Elemente. Der Strahl wird dann durch dieses Array in eine Anzahl räumlich getrennter Teilstrahlen zerteilt. Diese Teilstrahlen fallen dann auf ein zweites Array ablenkender Elemente. Auf einer Zielebene werden die Teilstrahlen übereinander gelegt, wodurch ein Strahl geformt wird, der eine homogene räumliche Strahlungsverteilung hat.

US-A-6069739 beschreibt eine Technik zum Einführen einer variablen Phasenverschiebung über Teile eines räumlich kohärenten Lichtstrahls ohne den Brennpunkt zu verschieben. Ein Fly's_Eye-Linsenarray wird verwendet, um das Licht zur gleichmäßigeren Ausleuchtung zu verteilen. In die Linsen werden freie Bereiche unterschiedlicher Länge eingearbeitet, um Teile des Strahles variabel verschieben zu können.

WO 2006/023180 A beschreibt ein Beleuchtungssystem, das eine Vielzahl von Licht erzeugenden Elementen und eine Vielzahl von Lichtsammeleinheiten zum Sammeln von durch die Licht erzeugenden Elemente ausgesandtem Licht aufweist. Abbildungseinheiten sind angeordnet um Bilder der entsprechenden Lichtsammeleinheiten zu einer Zielebene weiterzuleiten, wobei Licht von verschiedenen Licht erzeugenden Elementen auf der Zielebene überlappt.

US 2006/209310 A1 beschreibt ein optisches System zum Erzeugen einer Intensitätsverteilung auf einer Oberfläche mittels eines Lichtstrahles. Dabei weist das optische System zumindest ein erstes optisches Element auf, das den einfallenden Strahl in eine Vielzahl von Strahlen aufteilt, von denen einige zumindest bereichsweise in einer ersten Richtung auf der Oberfläche überlappen. Das optische Element weist außerdem zumindest ein zweites optisches Element auf, das zumindest einen der Strahlen in einer zweiten Richtung auf der Oberfläche verschiebt.

Ausgehend vom Stand der Technik ist es daher Aufgabe der vorliegenden Erfindung, eine Vorrichtung anzugeben, mit welcher Strahlung weitgehend unabhängig von der Eingangsintensitätsverteilung möglichst gleichmäßig, insbesondere ohne die Überlagerung von regelmäßigen Interferenzmustern, homogenisiert werden kann.

Diese Aufgabe wird gelöst durch die Vorrichtung zur Homogenisierung von Strahlung nach Anspruch 1, das Verfahren nach Anspruch 14 und die Verwendung nach Anspruch 15. Vorteilhafte Weiterbildungen der Vorrichtung bzw. des Verfahrens werden durch die abhängigen Ansprüche angegeben.

Der Kern der vorliegenden Erfindung ist es, eine Vielzahl von Linsensystemen mit parallelen optischen Achsen anzuordnen, wobei die Linsensysteme zumindest teilweise nicht identisch sind und wobei die nicht identischen Linsensysteme parallel zur Hauptebene der Linsensysteme die gleiche numerische Apertur in einer ersten Richtung haben. Im einfachsten Fall ist jedes dieser Linsensysteme eine Mikrolinse, so dass die Linsenanordnung mit der Vielzahl von Linsensystemen ein Mikrolinsenarray ist. Erfindungsgemäß kann aber auch ein Linsensystem zwei Mikrolinsen aufweisen, welche mit parallelen oder zusammenfallenden optischen Achsen hintereinander angeordnet sind. Ein solches Linsensystem hat dann einen resultierenden Brennpunkt, eine resultierende Hauptebene und eine resultierende numerische Apertur. Werden eine Vielzahl solcher Linsensysteme zu einer Linsenanordnung zusammengesetzt, so bilden die in Richtung der Strahlung zuvorderst liegenden Mikrolinsen ein erstes Mikrolinsenarray und die in Richtung der Strahlung dahinterliegenden Mikrolinsen ein zweites Mikrolinsenarray.

Für eine beliebige Linse oder ein beliebiges Linsensystem kann die numerische Apertur in verschiedene Richtungen unterschiedlich sein. Für die vorliegende Erfindung ist zunächst nur notwendig, dass die numerische Apertur in einer bestimmten Richtung für alle Linsen die gleiche ist. Die numerische Apertur in eine andere Richtung kann zunächst beliebig sein. Es sind darüberhinaus jedoch auch Linsenanordnungen erfindungsgemäß, bei denen die numerische Apertur in einer zur obigen ersten Richtung senkrechten Richtung ebenfalls für alle Linsen die gleiche ist. Die numerischen Aperturen in die erste und die zweite Richtung müssen nicht identisch sein, sie können es aber für einige Ausführungsformen sein.

Bei denen in dieser Erfindung auftretenden Mikrolinsenarrays und/oder Linsenanordnungen können die Hauptebenen der Mikrolinsen bzw. Linsensysteme auf einer gemeinsamen Fläche liegen. Diese Fläche kann eine Ebene sein, sie kann aber auch sphärisch, asphärisch, torisch oder eine Freiformfläche sein. Vorzugsweise werden die Parameter der Linsen oder Linsensysteme, wie z.B. ihre numerische Apertur, ihre Brennweite, ihre Abmessungen, Krümmungsradius, ihr freier Durchmesser und/oder ihre Vertexposition nicht zufällig gewählt, sondern durch eine Funktion gegeben, welche von der Position des Linsensystems in der Linsenanordnung bzw. dem Mikrolinsenarray abhängig ist. Eine solche Funktion kann eine analytische oder numerische Funktion sein. Sie kann stetig oder monoton sein, implizit oder explizit oder sie kann eine lineare, quadratische, kubische, polynomische oder transzendente Funktion sein. Grundsätzlich kommen alle Typen von Funktionen infrage. Die Funktionen sind hierbei vorzugsweise abhängig von der konkreten Geometrie der Anordnung, so dass Parameter der Linsen z.B. abhängig sind vom Krümmungsradius der Oberfläche im Falle der Unterbringung auf einer torischen Fläche oder z.B. dem eingeschlossenen Winkel für den Fall der Nutzung zweier Substrate.

Für eine möglichst gute Homogenisierung der Strahlung ist es vorteilhaft, wenn die Mikrolinsen bzw. Linsensysteme die Fläche des Mikrolinsenarrays bzw. die Linsenanordnung möglichst vollständig überdecken. Ist eine vollständige Überdeckung wegen der Geometrie der Linsen nicht möglich, so ist das Ziel, die Überdeckung zu maximieren.

Erfindungsgemäß können die verwendeten Mikrolinsen eine Reihe verschiedener Geometrien aufweisen. Diese Geometrien werden im folgenden vorgestellt, wobei auf einem gegebenen Mikrolinsenarray, in einer gegebenen Linsenanordnung oder einem Linsensystem alle Linsen die gleiche Form bei unter Umständen verschiedenen Abmessungen haben können oder Linsen mit unterschiedlichen Formen kombiniert werden können. Im einfachsten Fall sind die Linsen axialsymmetrisch um ihre optische Achse und/oder weisen einen kreisförmigen Umfang in der Ebene des Mikrolinsenarrays auf. Solche Linsen können z.B. sphärische Linsen sein. Erfindungsgemäß können sphärischen Linsen mit einem kreisförmigen Umfang verwendet werden, möchte man jedoch eine vollständige Überdeckung des Mikrolinsenarrays durch Mikrolinsen erreichen, so ist es möglich, sphärische Linsen zu verwenden, welche eine rechteckige Umrandung und/oder Apertur in der Ebene des Mikrolinsenarrays aufweisen. Hierunter fallen insbesondere sphärische Linsen mit einer quadratischen Umrandung bzw. Apertur.

Ein Teil der Mikrolinsen oder alle Mikrolinsen können anamorphotische und/oder elliptische Linsen sein. Auch diese können in der Ebene des Mikrolinsenarrays eine ihrer Geometrie entsprechende Umrandung, beispielsweise also eine elliptische Umrandung, eine rechteckige oder quadratische Umrandung aufweisen. Da jedoch der Linsendurchmesser nicht in allen azimutalen Richtungen gleich ist, ist auch die numerische Apertur und damit die Ausdehnung der beleuchteten Fläche von der azimutalen Koordinate abhängig. Für den Fall axialsymmetrischer Linsen entspricht damit das Aussehen der ausgeleuchteten Fläche der Randbegrenzung der Linsen. Eine rechteckige Umrandung liefert damit eine nahezu rechteckige Fläche, eine quadratische Umrandung eine wiederum nahezu quadratische Fläche und eine kreisförmige Linsenumrandung führt zu einer kreisförmig ausgeleuchteten Fläche.

Im Falle anamorphotischer oder elliptischer Linsen kann die numerische Apertur der Linsen zusätzlich über eine azimutalabhängige Brennweite der Linsen eingestellt werden, anstatt nur über die geometrische Ausdehnung der Linsen.

Erfindungsgemäß ist aber auch die Verwendung von Zylinderlinsen möglich. Solche Zylinderlinsen können in Richtung der Zylinderachse eine konstante Brennweite aufweisen. Die Zylinderachse liegt hierbei wie auch bei allen anderen Verwendungen von Zylinderlinsen parallel zur Ebene des Mikrolinsenarrays. Erfindungsgemäß ist es aber auch, dass sich die Brennweite einer, mehrerer oder aller Zylinderlinsen entlang der Zylinderachse kontinuierlich ändert. Diese Änderung kann gemäß einer Funktion der oben beschriebenen Art erfolgen. Neben einer stetigen Änderung der Brennweite ist auch eine unstetige Änderung möglich. Die Ränder der Zylinderlinsen in der Ebene des Mikrolinsenarrays können parallel zur Zylinderachse liegen. Sie können aber auch eine beliebige Linie, beispielsweise eine Wellenlinie, beschreiben. Ist eine vollständige Überdeckung des Mikrolinsenarrays mit Mikrolinsen angestrebt, so ist es vorteilhaft, wenn die Ränder benachbarter Zylinderlinsen parallel zueinander verlaufen. Werden Zylinderlinsen verwendet, so ist es auch möglich, dass sich die einzelnen Zylinderlinsen in Richtung der Zylinderachse über die gesamte Ausdehnung des Mikrolinsenarrays in dieser Richtung erstrecken. Solche Zylinderlinsen können auf dem Mikrolinsenarray wie Streifen angeordnet sein.

Zunächst ermöglichen Zylinderlinsen die Homogenisierung von Strahlung in nur einer Richtung. Zur Homogenisierung der Strahlung in zwei senkrecht zueinander stehenden Richtungen können jedoch auch Anordnungen von zwei gekreuzten Zylinderlinsen verwendet werden. Es können darüberhinaus auch zwei Vorrichtungen, wie sie in der vorliegenden Anmeldung beschrieben werden, mit einem oder mehreren Mikrolinsenarrays in Richtung des Strahlengangs hintereinander angeordnet werden. Die in Richtung des Strahlengangs vordere Vorrichtung homogenisiert die Strahlung in einer ersten Richtung und die in Richtung der Strahlung hintere Vorrichtung homogenisiert die Strahlung in einer zur ersten Richtung senkrechten zweiten Richtung. Auf diese Weise lässt sich auch mit Zylinderlinsen eine Homogenisierung in mehrere Richtungen erreichen. Wann immer Zylinderlinsen mit parallelen Umrandungen verwendet werden, können diese besonders gut mittels einer Reflow-Technik hergestellt werden.

In einigen der im Zusammenhang mit der vorliegenden Erfindung beschriebenen Ausführungsformen werden Linsen im Fokus anderer Linsen angeordnet. In all diesen Ausführungsformen ist es vorteilhaft, wenn die im Fokus angeordnete Linse nicht exakt im Fokus angeordnet ist, sondern etwas in Richtung des Strahlengangs oder entgegen des Strahlengangs verschoben ist. Auf diese Weise kann eine Aufheizung dieser Linsen vermieden werden. In Frage kommt z.B. eine Verschiebung im Bereich von 1 bis 5 % der Brennweite der fokussierenden Linse.

Die Homogenisierung kann verbessert werden, wenn die Vorrichtung gegenüber der einfallenden Strahlung in einer Richtung senkrecht zur einfallenden Strahlung bewegt wird. Eine solche Bewegung kann beispielsweise eine Schwingung sein. Wird eine Fourierlinse eingesetzt, so ist es darüberhinaus auch möglich, die Mikrolinsenarrays gegenüber der Fourierlinse zu bewegen, um eine verbesserte Homogenisierung zu erreichen. Vorteilhafterweise bleibt die Fourierlinse relativ zur einfallenden Strahlung ortsfest.

Die vorliegende Erfindung wird vorteilhafterweise mit einem, mit zweien oder mit drei gechirpten Mikrolinsenarrays realisiert, welche hintereinander im Strahlengang angeordnet sind.

Wird nur ein gechirptes Mikrolinsenarray verwendet, so ist die Linsenanordnung ein Mikrolinsenarray und die Linsensysteme sind jeweils einzelne Mikrolinsen. Diese Mikrolinsen sind vorteilhafterweise auf einer Fläche angeordnet, welche wie oben beschrieben geformt sein kann. Um die Hauptstrahlen der durch die einzelnen Mikrolinsen erzeugten Strahlenbündel auf einen gemeinsamen Punkt abzulenken, wird vorteilhafterweise in Richtung des Strahlengangs hinter dem Mikrolinsenarray eine Fourierlinse mit zu den Hauptebenen der Mikrolinsen paralleler Linsenebene so angeordnet, dass die optischen Achsen der Mikrolinsen die Fourierlinse durchstoßen. Die Verwendung einer Fourierlinse ist optional. Die räumliche Ausdehnung der auszuleuchtenden Fläche in der Homogenisierungsebene hängt allein von der numerischen Apertur der Linsen und der Brennweite der optionalen Fourierlinse ab. Vorteilhafterweise besitzt in einem solchen gechirpten Mikrolinsenarray jede Linse die gleiche numerische Apertur. Es ist dann für alle Linsen des Arrays das Verhältnis von Durchmesser bzw. Abmessung zu Brennweite konstant, wobei die Absolutwerte der Brennweite und des Durchmessers bzw. Abmessung frei gewählt werden können und durch Funktionen wie oben genannt beschrieben werden können. Im Falle nicht runder Linsen kann die Abmessung beispielsweise eine Kantenlänge oder die Breite der Linse in der entsprechenden Richtung sein.

Werden zwei Mikrolinsenarrays verwendet, so ist neben einem ersten Mikrolinsenarray ein zweites Mikrolinsenarray mit einer Vielzahl von mit parallelen optischen Achsen angeordneten Mikrolinsen so angeordnet, dass die optischen Achsen der Mikrolinsen des ersten Mikrolinsenarrays die Mikrolinsen des zweiten Mikrolinsenarrays durchstoßen. Die Mikrolinsenarrays sind also im Strahlengang der einfallenden Strahlung hintereinander angeordnet. Zwei derart hintereinander angeordnete Mikrolinsen können jeweils ein Linsensystem bilden. Beide Mikrolinsenarrays können jeweils auf einer Fläche wie oben beschrieben angeordnet sein. Vorteilhaftweise weist das zweite Mikrolinsenarray genauso viele Mikrolinsen auf wie das erste Mikrolinsenarray. Dabei ist jeder Mikrolinse des ersten Mikrolinsenarrays eine Mikrolinse des zweiten Mikrolinsenarrays mit gleicher Brennweite direkt nachgeschaltet, so dass die optische Achse der entsprechenden Mikrolinse des ersten Mikrolinsenarrays die entsprechende Mikrolinse des zweiten Mikrolinsenarrays durchstößt. Die optischen Achsen der Mikrolinsen des ersten Mirkolinsenarrays liegen parallel zu den optischen Achsen der entsprechenden Linsen des zweiten Mikrolinsenarrays. Insbesondere können die optischen Achsen auch zusammenfallen. Der Abstand der Mikrolinsen des zweiten Mikrolinsenarrays von den entsprechenden Mikrolinsen des ersten Mikrolinsenarrays ist gerade die Brennweite der entsprechenden Mikrolinse des ersten Mikrolinsenarrays. Die Mikrolinse des zweiten Arrays liegt also im Fokus der Mikrolinse des ersten Arrays.

Lichtbündel, welche das zweite Mikrolinsenarray durchlaufen haben, werden erfindungsgemäß so abgelenkt, dass sie sich in einem bestimmten Abstand vom zweiten Mikrolinsenarray überlagern. Hierfür gibt es zwei Möglichkeiten. Die erste Möglichkeit ist, die Mikrolinsen des zweiten Mikrolinsenarrays so anzuordnen, dass ihre optischen Achsen nicht exakt mit den optischen Achsen der entsprechenden Mikrolinsen des ersten Mikrolinsenarrays zusammenfallen, sondern gerade so gegeneinander verschoben sind, dass ein vom ersten Mikrolinsenarray einfallendes Strahlenbündel von der entsprechenden Mikrolinse des zweiten Mikrolinsenarrays um einen bestimmten Winkel abgelenkt wird. Dieser Winkel wird für jede Mikrolinse so gewählt, dass das entsprechende Strahlenbündel auf den gewünschten Bereich, in welchem sich die Strahlenbündel überlagern sollen, abgelenkt wird. Der Versatz der zweiten Linse eines Kanals resultiert aus der Brennweite der Linse und dem Abstand der optischen Achse dieses Kanals zur optischen Achse des Gesamtaufbaus. Die Linsen des zweiten Arrays sind hierbei in einer Richtung parallel zur Ebene der Linsen verschoben. Alternativ hierzu kann die Ablenkung auch durch eine in Richtung des Strahlengangs hinter dem zweiten Mikrolinsenarray angeordnete Fourierlinse erfolgen. In diesem Fall fallen vorteilhafterweise die optischen Achsen der Mikrolinsen des ersten Mikrolinsenarrays mit den optischen Achsen der entsprechenden Mikrolinsen des zweiten Mikrolinsenarrays zusammen. Hier findet also keine Ablenkung statt. Erst die anschließende Fourierlinse lenkt alle Strahlenbündel auf einen gemeinsamen Bereich ab.

Auch bei der Verwendung von zwei gechirpten Mikrolinsenarrays müssen die Durchmesser dᵢ der Linsen des ersten Arrays nicht identisch sein, jedoch sind die Brennweiten fᵢ so angepasst, dass sich kanalweise die gleiche numerische Apertur ergibt (d_{i/}fᵢ=konstant). Die Linsensysteme aus je einer Linse des ersten Mikrolinsenarrays und einer Linse des zweiten Mikrolinsenarrays haben also die gleiche numerische Apertur in zumindest einer Richtung. Wie beschrieben ist vorteilhafterweise die Brennweite der Linsen des ersten Arrays gleich der Brennweite der Linsen des zweiten Arrays.

Für den Fall, dass anamorphotische Linsen genutzt werden, kann das zweite Mikrolinsenarray in zwei Arrays bestehend aus Zylinderlinsen aufgespalten werden, wobei die Zylinderlinsen gekreuzt angeordnet sind. Ursache hierfür ist die unterschiedliche Brechkraft der anamorphotischen Linsen in zwei senkrechten Richtungen und die Bedingung, dass die zwei Linsen in der Brennweite der ersten Linse liegen müssen.

Werden drei Mikrolinsenarrays verwendet, wobei nicht notwendigerweise Zylinderlinsen verwendet werden, so ist der Linsenanordnung aus ersten und zweiten Mikrolinsen in Richtung des Strahlengangs ein drittes Mikrolinsenarray nachgestellt. Hierbei fallen vorteilhafterweise die optischen Achsen der Mikrolinsen des ersten Mikrolinsenarrays und des zweiten Mikrolinsenarrays zusammen. Das dritte Mikrolinsenarray ist dann so angeordnet, dass diese optischen Achsen es durchstoßen. Vorteilhafterweise weist das dritte Mikrolinsenarray so viele Mikrolinsen auf wie die Linsensysteme durch das erste und zweite Mikrolinsenarray vorgeschaltet sind. Dabei ist jedem Linsensystem eine Mikrolinse des dritten Mikrolinsensystems nachgeschaltet. Die optischen Achsen liegen wiederum vorteilhafterweise parallel oder fallen zusammen. Auch im Falle dreier Mikrolinsenarrays müssen die Strahlenbündel auf einen gemeinsamen Bereich abgelenkt werden, wozu wiederum zwei Möglichkeiten existieren. Zum einen können wie oben für zwei Mikrolinsensysteme beschrieben die optischen Achsen der Mikrolinsen des dritten Mikrolinsensystems so gegen die optischen Achsen der Linsensysteme verschoben sein, dass die Linsen des dritten Arrays die einfallenden Strahlenbündel auf einen gemeinsamen Bereich ablenken. Alternativ hierzu kann wiederum auch eine Fourierlinse eingesetzt werden.

Die Mikrolinsen von benachbarten Mikrolinsenarrays können in einer bevorzugten Variante jeweils einseitig auf einem Substrat aus einem transparenten Material, insbesondere Glas oder ein transparentes Polymermaterial angeordnet sein. Dabei können die Substrate mit zugehörigen Mikrolinsenarrays auch zueinander beabstandet angeordnet sein, wobei der Zwischenraum zwischen den Substraten mit Luft oder einem transparenten Material, insbesondere Glas oder transparente Polymermaterialien, gefüllt ist.

Ebenso ist es möglich, dass die Mikrolinsen zweier benachbarter Mikrolinsenarrays auf im Strahlengang hintereinander liegenden Flächen eines Körpers aus einem transparenten Material, insbesondere Glas oder ein transparentes Polymermaterial angeordnet sind. Als Körper sind hier z.B. Prismen und Körper mit einem viereckigen Querschnitt bevorzugt. Aber auch andere Körper mit in dieser Weise hintereinander liegenden Flächen kommen hierfür in Frage.

Die Vorrichtung kann weiter dadurch gekennzeichnet sein, dass die Mikrolinsen des zweiten Mikrolinsenarrays auf einer Fläche angeordnet sind.

Auch kann die Fläche des ersten und/oder gegebenenfalls zweiten Mikrolinsenarrays plan, sphärisch, asphärisch, torisch oder eine Freiformfläche sein.

Die Vorrichtung kann sich außerdem dadurch auszeichnen, dass die optischen Achsen der Mikrolinsen des zweiten Mikrolinsenarrays mit den optischen Achsen der entsprechenden Mikrolinse des ersten Mikrolinsenarrays zusammenfallen.

Auch können die Mikrolinsen des zweiten Mikrolinsenarrays so gegen die entsprechenden Mikrolinsen des ersten Mikrolinsenarrays in der Linsenebene der Mikrolinse des zweiten Mikrolinsenarrays verschoben sein, dass Licht, welches parallel zur optischen Achse auf eine Mirkolinse des ersten Mikrolinsenarrays fällt, durch die entsprechende Mikrolinse des zweiten Mikrolinsenarrays so abgelenkt wird, dass es in einem bestimmten Abstand vom zweiten Mikrolinsenarray für alle Mikrolinsen des ersten Mikrolinsenarrays den gleichen Bereich ausleuchtet.

Die optischen Achsen der Mikrolinsen des dritten Mikrolinsenarrays können mit den optischen Achsen der entsprechenden Linsensysteme zusammenfallen, wenn auf der optischen Achse jedes Linsensystems eine Mikrolinse des dritten Mikrolinsenarrays so angeordnet ist, dass die optische Achse der jeweiligen Mikrolinse des dritten Mikrolinsenarrays parallel zur optischen Achse des entsprechenden Linsensystems liegt, wobei die Mikrolinse des dritten Mikrolinsensystems mit ihrer Hauptebene im Fokus des entsprechenden Linsensystems angeordnet ist.

Auch können die optischen Achsen der Mikrolinsen des dritten Mikrolinsenarrays so gegen die optischen Achsen der entsprechenden Linsensysteme verschoben sein, dass Lichtstrahlen, welche entlang der optischen Achse eines Linsensystems auf das jeweilige Linsensystem treffen, von der entsprechenden Mikrolinse des dritten Mikrolinsenarrays auf einen für alle Linsensysteme gemeinsamen Punkt abgelenkt werden.

Die Mikrolinsen von benachbarten Mikrolinsenarrays können jeweils einseitig auf einem Substrat aus einem transparenten Material, insbesondere Glas oder ein Polymermaterial, untergebracht sein. Die Substrate können zueinander beabstandet sein, wobei der Zwischenraum mit Luft oder einem transparenten Material gefüllt ist.

Der Körper, auf dem die Mikrolinsen zweier benachbarter Mikrolinsenarrays auf im Strahlengang hintereinander liegenden Flächen des Körpers untergebracht sein können, kann ein Prisma oder ein Körper mit einem viereckigen Querschnitt sein.

Auch können die Mikrolinsen des in Richtung des Strahlenganges letzten Mikrolinsenarrays in der Nähe aber nicht exakt im Fokus der davor liegenden Mikrolinsen bzw. Linsensysteme angeordnet sein.

Die Vorrichtung kann in einer Richtung parallel zur Ebene des ersten Mikrolinsenarrays gegenüber der einfallenden Strahlung verschiebbar sein.

Zumindest ein Teil der Mikrolinsen zumindest eines Mikrolinsenarrays kann axialsymmetrisch um ihre optische Achse sein und/oder einen kreisförmigen Umfang in der Ebene des Mikrolinsenarrays aufweisen. Zumindest ein Teil der Mikrolinsen zumindest eines Mikrolinsenarrays können Linsen sein, welche axialsymmetrisch um ihre optische Achse sind, und eine rechteckige Umrandung in der Ebene des Mikrolinsenarrays aufweisen.

Zumindest ein Teil der Linsen, welche axialsymmetrisch um ihre optische Achse sind, können eine quadratische Umrandung in der Ebene des Mikrolinsenarrays aufweisen.

Zumindest ein Teil der Mikrolinsen können anamorphotische und/oder elliptische Linsen sein.

Zumindest ein Teil der anamorphotischen bzw. elliptischen Mikrolinsen zumindest eines Mikrolinsenarrays können rechteckige Umrandungen in der Ebene des Mikrolinsenarrays aufweisen.

Zumindest ein Teil der anamorphotischen bzw. elliptischen Mikrolinsen zumindest eines Mikrolinsenarrays können quadratische Umrandungen in der Ebene des Mikrolinsenarrays aufweisen.

Zumindest ein Teil der Mikrolinsen zumindest eines Mikrolinsenarrays können außerdem Zylinderlinsen sein.

Zumindest ein Teil der Zylinderlinsen zumindest eines Mikrolinsenarrays können auch entlang der Zylinderachse konstante Brennweiten aufweisen.

Die Brennweite zumindest einer Zylinderlinse entlang der Zylinderachse kann nicht konstant sein und/oder sich entlang der Zylinderachse kontinuierlich ändern. Die Ränder der Zylinderlinsen können vorzugsweise parallel zueinander verlaufen.

Die Länge der Zylinderlinsen kann gleich der Ausdehnung des Mikrolinsenarrays in Richtung der Zylinderachsen sein.

Das zweite und das dritte Mikrolinsenarray können jeweils zumindest eine Zylinderlinse aufweisen, wobei die Zylinderlinse des zweiten und/oder dritten Mikrolinsenarrays auf der optischen Achse der Zylinderlinse des ersten Mikrolinsenarrays mit paralleler optischer Achse angeordnet ist und in ihrer Linsenebene um einen Winkel gegenüber der Zylinderlinse des ersten Mikrolinsenarrays gedreht ist.

Im Strahlengang hinter der Vorrichtung kann auch eine gleich aufgebaute Vorrichtung so angeordnet sein, dass die optischen Achsen der Mikrolinsen des in Richtung des Strahlengangs hintersten Mikrolinsenarrays der vorderen Vorrichtung das in Richtung des Strahlenganges vorderste Mikrolinsenarray der hinteren Vorrichtung durchstoßen und parallel zu den optischen Achsen der Mikrolinsen des vordersten Mikrolinsenarrays der hinteren Vorrichtung verlaufen, wobei die hintere Vorrichtung gegenüber der vorderen Vorrichtung um 90° um die Richtung der optischen Achsen gedreht ist.

Auch können die Mikrolinsen des gleichen Mikrolinsenarrays zumindest teilweise unterschiedliche Brennweiten haben.

Das Verhältnis von durch Mikrolinsen überdeckter Fläche zumindest eines Mikrolinsenarrays zur Gesamtfläche des entsprechenden Mikrolinsenarrays für gegebene Mikrolinsen ist vorzugsweise maximal.

Im Folgenden wird die vorliegende Erfindung anhand einiger Ausführungsbeispiele beschrieben.
- Figur 1: zeigt eine Homogenisierungsvorrichtung mit einem regulären Mikrolinsenarray nach dem Stand der Technik.
- Figur 2: zeigt eine Homogenisierungsvorrichtung mit zwei gechirpten Mikrolinsenarrays.
- Figur 3: zeigt eine Homogenisierungsvorrichtung mit zwei gechirpten Mikrolinsenarrays, welche auf planaren Substraten untergebracht sind.
- Figur 4: zeigt eine Homogenisierungsvorrichtung mit drei gechirpten Mikrolinsenarrays.
- Figur 5: zeigt exemplarisch eine Anordnung mit zwei Mikrolinsenarrays, deren Mikrolinsen lateral gegeneinander versetzt sind.
- Figur 6: zeigt ein gechirptes Mikrolinsenarray mit axialsymmetrischen Linsen mit runder Linsenumrandung.
- Figur 7: zeigt ein gechirptes Mikrolinsenarray mit axialsymmetrischen Linsen mit runder Linsenumrandung und geordneten Durchmessern.
- Figur 8: zeigt ein gechirptes Mikrolinsenarray mit axialsymmetrischen Linsen mit rechteckiger Linsenumrandung.
- Figur 9: zeigt ein gechirptes Mikrolinsenarray mit axialsymmetrischen Linsen mit rechteckiger Linsenumrandung, wobei die Mikrolinsen nach Größe geordnet sind.
- Figur 10: zeigt ein gechirptes Mikrolinsenarray axialsymmetrischer Linsen mit quadratischer Linsenumrandung.
- Figur 11: zeigt ein gechirptes Mikrolinsenarray axialsymmetrischer Linsen mit quadratischer Linsenumrandung, welche nach ihrer Größe geordnet sind.
- Figur 12: zeigt ein gechirptes Mikrolinsenarray anamorphotischer Linsen mit rechteckiger Linsenumrandung.
- Figur 13: zeigt ein gechirptes Mikrolinsenarray anamorphotischer Linsen mit rechteckiger Linsenumrandung, welche nach ihrer Größe geordnet sind.
- Figur 14: zeigt ein gechirptes Mikrolinsenarray mit einer Mischung axialsymmetrischer und anamorphotischer Linsen mit rechteckiger Linsenumrandung.
- Figur 15: zeigt ein gechirptes Mikrolinsenarray mit Zylinderlinsen, deren numerische Apertur zellenweise gleich ist.
- Figur 16: zeigt ein gechirptes Mikrolinsenarray mit Zylinderlinsen mit konstanter Breite über die Länge des Arrays.
- Figur 17: zeigt ein gechirptes Mikrolinsenarray mit Zylinderlinsen zellen- und linsenabschnittsweise gleicher Apertur.
- Figur 18: zeigt ein gechirptes Mikrolinsenarray mit Zylinderlinsen mit variierender Breite über die Länge des Arrays.
- Figur 19: zeigt ein System mit zwei Mikrolinsenarrays mit auf ebenen Substraten angeordneten Zylinderlinsen nach Fig. 16
- Figur 20: zeigt ein System mit zwei Mikrolinsenarrays mit auf ebenen Substraten angeordneten Zylinderlinsen nach Fig. 18
- Figur 21: zeigt anhand von Schnittdarstellungen verschiedene Ausführungsvarianten für erfindungsgemäße Vorrichtungen.

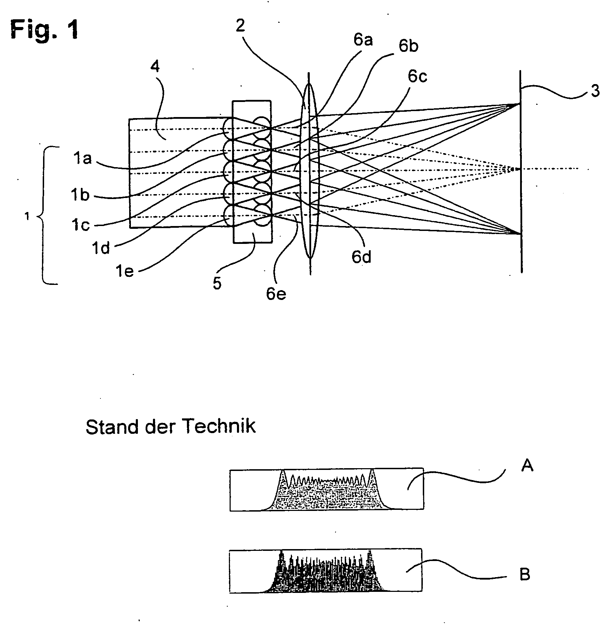

Figur 1 zeigt eine Homogenisierungsvorrichtung mit einem regulären Mikrolinsenarray 1 nach dem Stand der Technik. Die einfallende Strahlung 4 trifft hierbei auf das reguläre Mikrolinsenarray 1, wo es zunächst durch die Mikrolinsen 1a bis 1e in deren Brennpunkten gebündelt wird, um dann hinter diesen Brennpunkten divergent auseinanderzulaufen. Die durch die einzelnen Mikrolinsen 1a bis 1e erzeugten Teilbündel 6a bis 6e treffen nach dem Durchlaufen der einzelnen Brennpunkte auf die Fourierlinse 2. Der Divergenzwinkel, mit welchem die Teilbündel 6a bis 6e hinter dem Brennpunkt auseinanderlaufen, entspricht der numerischen Apertur der Mikrolinsen 1a bis 1e. Die Fourierlinse 2 lenkt nun die einzelnen Strahlbündel 6a bis 6e derart ab, dass die einzelnen Teilbündel 6a bis 6e in der Brennebene 3 der Fourierlinse 2 übereinanderliegen. Dadurch, dass die in der Brennebene 3 der Fourierlinse 2 eintreffenden Leistungsanteile 6a bis 6e aus unterschiedlichen Einzellinsen stammen, wird die Fläche in der Brennebene 3 der Fourierlinse 2 homogen ausgeleuchtet. Der Grad der Homogenisierung ist dabei abhängig von der Zahl der Einzellinsen 1a bis 1e Bei ausreichend großer Anzahl der Einzellinsen 1a bis 1e ist die Homogenisierung nahezu unabhängig von der Eingangsintensitätsverteilung 4. Bedingung ist jedoch, dass die numerische Apertur der einfallenden Strahlung maximal der numerischen Apertur der Linsen entspricht. Die Ausdehnung der homogen beleuchteten Fläche wird durch die numerische Apertur der Linsen 1a bis 1e und der Brennweite der Fourierlinse 2 bestimmt. Um optische Verluste so klein wie möglich zu halten, ist die gesamte von der Strahlung getroffene Fläche der Linsen 1 mit Linsen 1a bis 1e zu bedecken. Der Füllfaktor des Mikrolinsenarrays 1 sollte also möglichst nahe an 1 liegen.

Einschub A der Figur 1 zeigt die Intensitätsverteilung der die Homogenisierungsvorrichtung durchlaufenden Strahlung in der beleuchteten Fläche 3 für den Fall, dass das Mikrolinsenarray 1 nur eine einzige Linse aufweist. Die Intensitätsverteilung A zeigt durch Interferenzeffekte erzeugte Schwankungen der Intensität. Diese beeinträchtigen die Homogenität des Lichts.

Einschub B der Figur 1 zeigt die Intensitätsverteilung der in der auszuleuchtenden Fläche 3 eintreffenden Strahlung bei Verwendung eines Mikrolinsenarrays 1 mit einer Vielzahl von einzelnen Mikrolinsen 1a bis 1e. Die Intensitätsverteilung B ist mit dem gleichen Interferenzmuster moduliert, welches auch bei einer Einzellinse auftritt. Darüberhinaus wirken jedoch die regelmäßig angeordneten Mikrolinsen 1a bis 1e des regulären Mikrolinsenarrays 1 wie ein Gitter, wodurch die Intensität in der ausgeleuchteten Fläche in regelmäßigen Abständen auf Null abfällt. Der räumliche Abstand der Intensitätsmaxima ist dabei umgekehrt proportional zur Breite der Einzellinsen 1a bis 1e, d.h. je kleiner die Linse ist, desto größer ist der Abstand zwischen den Maxima. Das bedeutet auch, dass die Verwendung kleinerer Linsen zu einer schlechteren Homogenisierung des Lichts in der auszuleuchtenden Fläche 3 führt. Werden jedoch größere Linsen 1a bis 1e verwendet, so ist deren Anzahl geringer, wodurch die Homogenität ebenfalls verringert wird. Der Homogenisierbarkeit des Lichts bei Verwendung von regulären Mikrolinsenarrays ist also eine prinzipielle Grenze gesetzt.

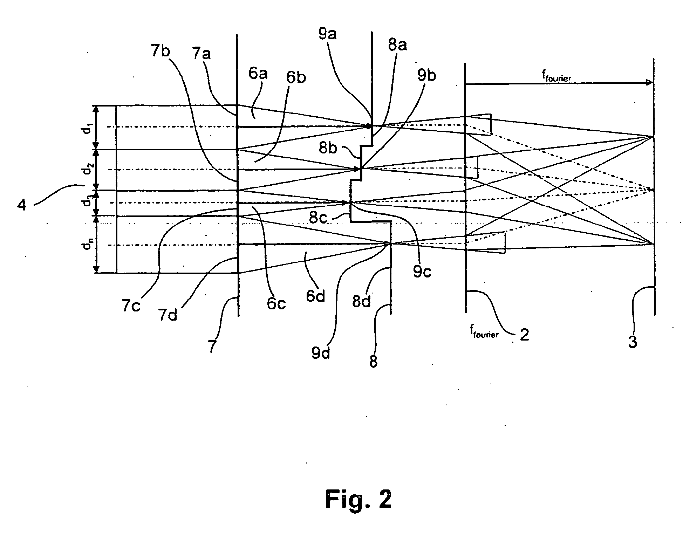

Figur 2 zeigt die Anordnung einer erfindungsgemäßen Homogenisierungsvorrichtung mit zwei Mikrolinsenarrays 7 und 8. Das zu homogenisierende Licht trifft hierbei zunächst auf das erste Mikrolinsenarray 7, wo durch die einzelnen Mikrolinsen 7a bis 7b einzelne Teillichtbündel 6a bis 6d erzeugt werden. Diese Lichtbündel 6a bis 6d treffen dann auf das zweite Mikrolinsenarray 8 und anschließend auf die Fourierlinse 2, welche die einzelnen Teilbündel 6a bis 6b auf einen gemeinsamen Bereich in der Brennebene 3 der Fourierlinse 2 ablenkt. Im Gegensatz zum regulären Mikrolinsenarray sind die Mikrolinsen 7a bis 7b des hier verwendeten gechirpten Mikrolinsenarrays 7 nicht identisch. Vielmehr haben die hier verwendeten Mikrolinsen 7a bis 7d unterschiedliche Durchmesser und unterschiedliche Brennweiten 9a bis 9d. Das zweite Mikrolinsenarray 8 ist nun so gestaltet, dass zu jeder Mikrolinse 7a bis 7d des ersten Mikrolinsenarrays 7 eine Mikrolinse 8a bis 8d des zweiten Mikrolinsenarrays 8 existiert. Diese zweiten Mikrolinsen 8a bis 8d sind dabei jeweils in den Brennpunkten 9a bis 9b der entsprechenden Mikrolinsen 7a bis 7d des ersten Mikrolinsenarrays 7 angeordnet. Diese Brennweiten 9a bis 9d sind im gezeigten Beispiel unterschiedlich, so dass sich die Einzellinsen 8a bis 8d nicht in einer Ebene befinden. Die ersten Linsen 7a bis 7d haben unterschiedliche Durchmesser und unterschiedliche Brennweiten, ihre numerische Apertur ist jedoch gleich. Eine solche Homogenisierungsvorrichtung erzeugt in der Brennebene 3 der Fourierlinse 2 eine homogene Intensitätsverteilung.

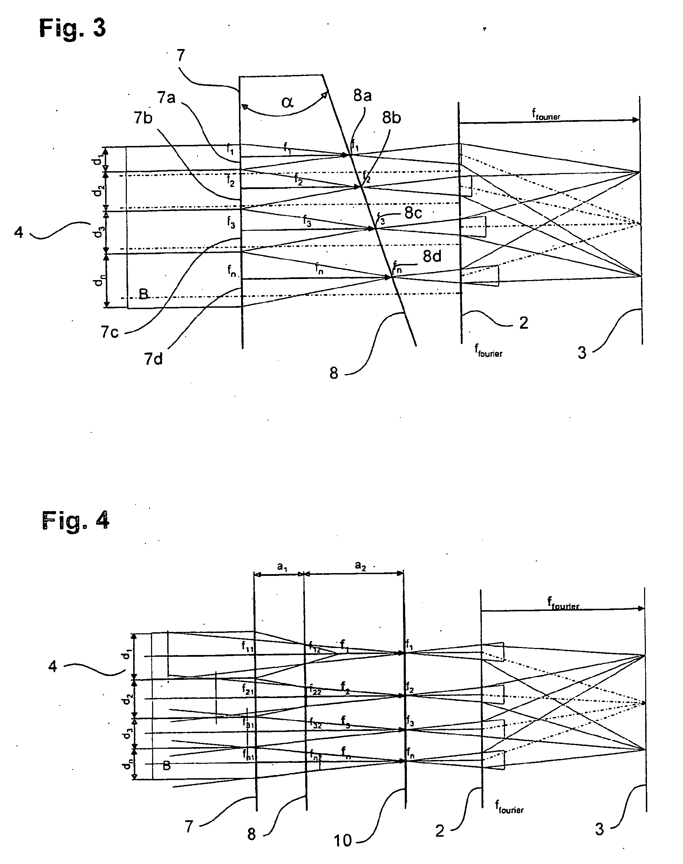

Figur 3 zeigt ebenfalls eine erfindungsgemäße Homogenisierungsvorrichtung mit zwei gechirpten Mikrolinsenarrays 7 und 8. Im Gegensatz zur in Figur 2 gezeigten Vorrichtung sind hier jedoch die einzelnen Linsen 7a bis 7d des ersten Mikrolinsenarrays 7 nach ihren Durchmessern bzw. Brennweiten geordnet. Da die Mikrolinsen 8a bis 8d des zweiten Mikrolinsenarrays 8 wiederum in den Brennweiten der entsprechenden Mikrolinsen 7a bis 7d des ersten Mikrolinsenarrays 7 untergebracht sind, kommen diese Linsen 8a bis 8d auf einer Ebene zu liegen. Durch die unterschiedlichen Brennweiten ist diese Ebene 8 gegenüber der Ebene 7 um einen Winkel α geneigt. Wie auch in Figur 2 werden die erzeugten Strahlbündel 6a bis 6d durch die Fourierlinse 2 in deren Brennweite 3 auf eine gemeinsame Fläche abgelenkt.

Figur 4 zeigt eine erfindungsgemäße Homogenisierungsvorrichtung mit drei Mikrolinsenarrays 7, 8 und 9. Wiederum trifft das zu homogenisierende Licht 4 zunächst auf das erste Mirkolinsenarray 7, welches durch die Einzellinsen 7a bis 7d den Lichtstrahl 4 in Teilbündel 6a bis 6d aufspaltet. Jeder Mikrolinse 7a bis 7d des ersten Mikrolinsenarrays 7 ist eine Mikrolinse 8a bis 8d des zweiten Mikrolinsenarrays 8 zugeordnet. Im gezeigten Beispiel fallen die optischen Achsen der Mikrolinsen 7a bis 7d des ersten Mikrolinsenarrays 7 mit den optischen Achsen der entsprechenden Linsen 8a bis 8b des zweiten Mikrolinsenarrays 8 zusammen. Die Paare von Mikrolinsen 7a, 8a und 7b, 8b und 7c, 8c sowie 7d und 8d bilden jeweils ein Linsensystem mit einer resultierenden Brennweite. In den daraus resultierenden Brennpunkten 9a bis 9d dieser Linsensysteme aus Mikrolinsen 7a bis 7d und Mikrolinsen 8a bis 8d sind die Mikrolinsen 10a bis 10d des dritten Mikrolinsensystems 10 angeordnet. Die Mikrolinsen 7a bis 7d und 8a bis 8d können unterschiedliche Durchmesser, Abmessungen und/oder Brennweiten haben. Entscheidend ist, dass die numerischen Aperturen der Linsensysteme aus Mikrolinsen 7a bis 7d des ersten Mikrolinsensystems 7 und den Mikrolinsen 8a bis 8d des zweiten Mikrolinsensystems 8 die gleiche numerische Apertur in zumindest einer Richtung haben. Nachdem die Lichtbündel 6a bis 6d die drei Mikrolinsenarrays 7, 8 und 10 durchlaufen haben, treffen sie auf die Fourierlinse 2, welche die einzelnen Lichtbündel 6a bis 6d auf einen gemeinsamen Bereich 3 ablenken, welcher dann homogen ausgeleuchtet wird. Wie auch in den anderen gezeigten Beispielen ist es auch hier vorteilhaft, wenn Mikrolinsen 7a bis 7d, 8a bis 8d und 10a bis 10d die Flächen ihrer Arrays 7, 8 bzw. 10 möglichst vollständig überdecken, d.h. dass der Füllfaktor der Mikrolinsenarrays möglichst nahe bei 1 liegt.

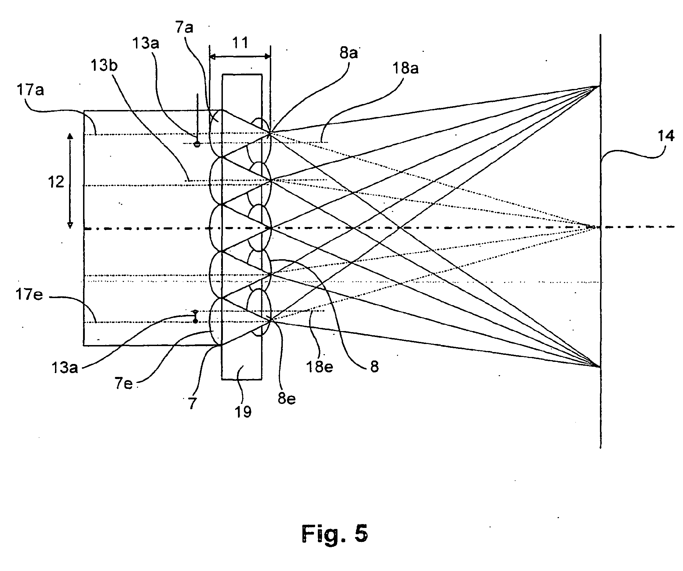

Figur 5 zeigt exemplarisch eine Anordnung zweier Mikrolinsenarrays 7 und 8, durch welche die einzelnen Lichtbündel ohne eine Fourierlinse auf einen gemeinsamen Bereich 14 abgelenkt werden können. Im gezeigten Beispiel sind die Mikrolinsen 7a bis 7e und 8a bis 8e im Abstand ihrer Brennweite 11 auf gegenüberliegenden Seiten eines planaren Substrats 19 angeordnet. Die optischen Achsen 17a bis 17e der Mikrolinsen 7a bis 7e des ersten Mikrolinsenarrays 7 durchstoßen jeweils die Mikrolinsen 8a bis 8e des zweiten Mikrolinsenarrays 8. Im Gegensatz zum Fall der Verwendung einer Fourierlinse fallen diese optischen Achsen 17a bis 17e jedoch nicht mit den entsprechenden optischen Achsen 18a bis 18e der entsprechenden Mikrolinsen 8a bis 8e des zweiten Mikrolinsenarrays 8 zusammen, sondern liegen parallel zu diesen, um Abstände 13a, 13b versetzt. Der Versatz 13a, 13b wird hierbei in Abhängigkeit vom Abstand 12 der entsprechenden optischen Achse 17a vom Mittelpunkt des einfallenden Strahls so gewählt, dass ein eine Mikrolinse 7a bis 7e durchlaufender Teilstrahl durch die entsprechende Mikrolinse 8a bis 8e anschließend so abgelenkt wird, dass er einen für alle Mikrolinsen 7a bis 7e gemeinsamen Bereich 14 ausleuchtet. Für den allgemeinen Aufbau mit in zur Ebene der Mikrolinsenarrays paralleler Richtung quasi kontinuierlich gechirpten Linsen resultiert der Versatz Δxᵢ(y) der letzten Linse des i-ten Kanals aus der Brennweite fᵢ(y) und dem Abstand rᵢ(y) der optischen Achse des Kanals zur optischen Achse des Gesamtaufbaus.

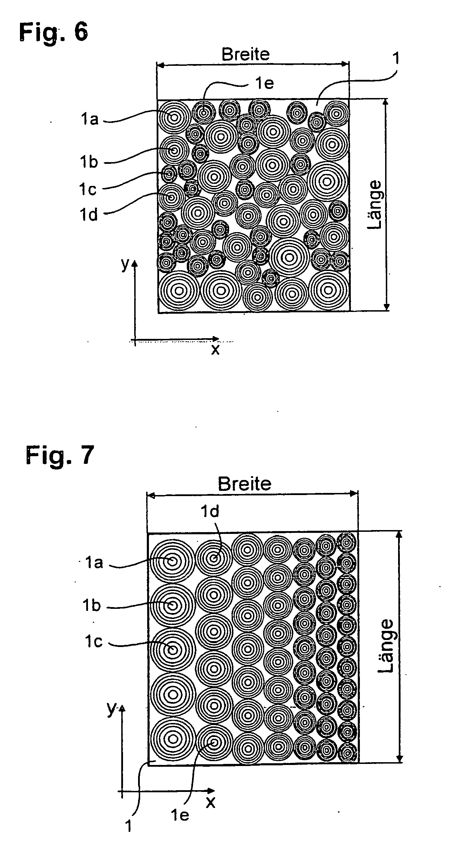

Figur 6 zeigt ein gechirptes Mikrolinsenarray 1 in der Aufsicht auf seine Fläche. Im gezeigten Beispiel sind die einzelnen Mikrolinsen 1a bis 1e usw. axialsymmetrisch, haben eine kreisförmige Linsenumrandung und unterschiedliche Durchmesser. Die numerischen Aperturen der einzelnen Linsen 1a bis 1e sind jedoch zumindest in einer Richtung, also z.B. der x- oder der γ-Richtung, identisch. Das bedeutet, dass die numerische Apertur in der entsprechenden Richtung für alle Linsen gleich ist. Die Mikrolinsen 1a bis 1e sind im gezeigten Beispiel axialsymmetrisch und haben einen kreisförmigen Umfang. Vorteilhafterweise sind sie so verteilt, dass die Fläche des Mikrolinsenarrays 1 von den Mikrolinsen 1a bis 1e usw. möglichst vollständig überdeckt wird.

Auch Figur 7 zeigt die Aufsicht auf die Fläche eines Mikrolinsenarrays 1. Die Vielzahl der Mikrolinsen 1a bis 1e usw. sind wiederum axialsymmetrisch um ihre optische Achse, welche senkrecht zur Fläche des Mikrolinsenarrays 1 steht und haben einen kreisförmigen Umfang in der Fläche des Mikrolinsenarrays. Im Unterschied zu dem in Figur 6 gezeigten Mikrolinsenarrays 1 sind die Vielzahl der Mikrolinsenarrays 1a bis 1e im Figur 7 gezeigten Fall in x-Richtung nach ihrem Durchmesser geordnet. In γ-Richtung haben alle Mikrolinsen 1a, 1b und 1c den gleichen Durchmesser. Wiederum wird vorteilhafterweise eine Anordnung gewählt, welche die Fläche des Mikrolinsenarrays 1 so vollständig wie möglich überdeckt.

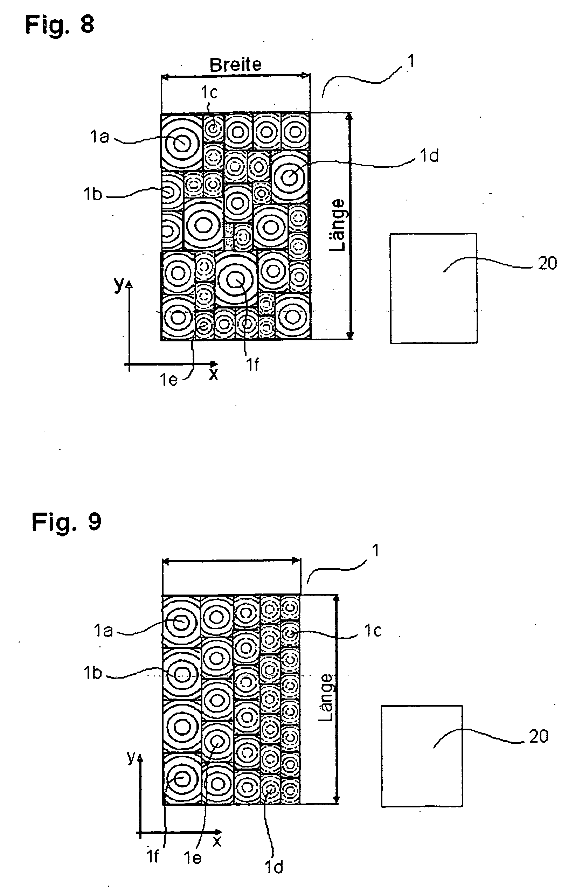

Figur 8 zeigt die Aufsicht auf die Fläche eines Mikrolinsenarrays 1 mit einer Vielzahl von Mikrolinsen 1a bis 1f, welche axialsymmetrisch und/oder sphärisch sind und eine rechteckige Linsenumrandung haben. Im hier gezeigten Beispiel haben die Linsen unterschiedliche Abmessungen und unterschiedliche Brennweiten und liegen unsortiert vor. Die numerische Apertur dieser Linsen muss jedoch in zumindest einer Richtung, also z.B. der x- oder der γ-Richtung, jeweils die gleiche sein, so wie es auch in den anderen Beispielen der Fall ist. Die numerische Apertur jeder Linse in der anderen Richtung kann unterschiedlich sein. Die numerische Apertur kann auch jeweils in alle Richtungen gleich sein für jede Linse. Dadurch, dass die gezeigten Mikrolinsen 1a bis 1f usw. rechteckige Umrandungen haben, ist eine vollständige Überdeckung der Fläche des Mikrolinsenarrays 1 möglich und vorteilhaft. Während die in Figur 6 und Figur 7 gezeigten Mikrolinsenarrays kreisförmig ausgeleuchtete Flächen erzeugen, wird durch das in Figur 8 gezeigte Mikrolinsenarray eine rechteckig ausgeleuchtete Fläche 20 erzeugt.

Figur 9 zeigt ein Mikrolinsenarray 1, welches dem in Figur 8 gezeigten entspricht. Wiederum sind eine Vielzahl axialsymmetrischer und/oder sphärischer Mikrolinsen 1a bis 1f flächendeckend nebeneinander angeordnet. Die Mikrolinsen 1a bis 1f liegen hier jedoch nicht ungeordnet vor, sondern haben für eine gegebene x-Position jeweils in γ-Richtung die gleiche Länge, während in x-Richtung die Breite und Länge der Mikrolinsen abnimmt. Linsen an unterschiedlichen x-Positionen haben auch unterschiedliche Längen, damit diese unterschiedliche Brennweiten besitzen. Die numerische Apertur in γ-Richtung ist für alle Linsen des Arrays gleich. Auch im hier gezeigten Beispiel ist die ausgeleuchtete Fläche 20 einer Homogenisierungsvorrichtung mit einem solchen Mikrolinsenarray 1 rechteckig.

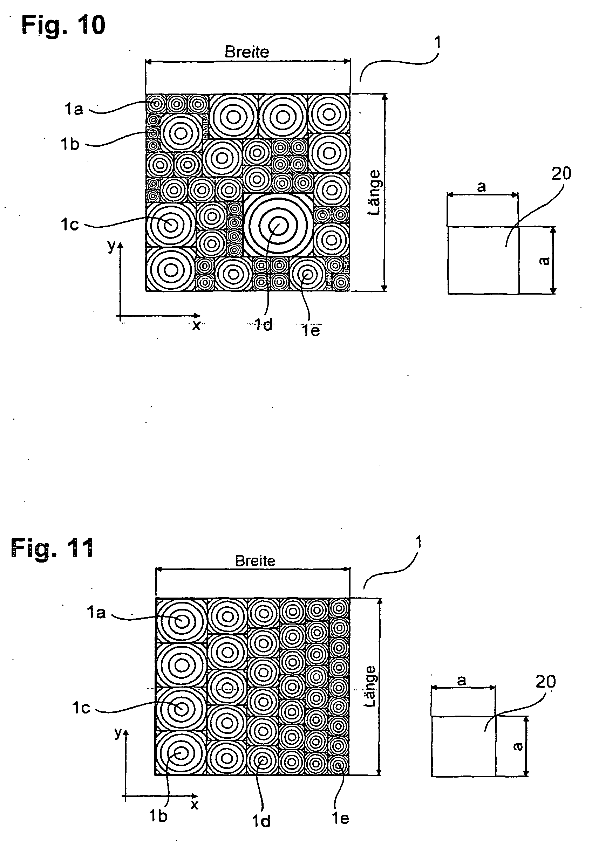

Figur 10 zeigt eine Anordnung von axialsymmetrischen Mikrolinsen, welche um ihre optische Achse rotationssymmetrisch sind. Wie auch in den anderen in Figur 6 bis Figur 9 gezeigten Mikrolinsenarrays stehen diese optischen Achsen der einzelnen Mikrolinsen 1a bis 1e senkrecht auf der Fläche des Mikrolinsenarrays 1. Die Mikrolinsen 1a bis 1e sind axialsymmetrisch und/oder sphärisch und haben eine quadratische Linsenumrandung. Die Mikrolinsen 1a bis 1e sind nicht geordnet, aber so angeordnet, dass sie die Fläche des Mikrolinsenarrays 1 vollständig überdecken. Das gezeigte Mikrolinsenarray 1 wird in einer erfindungsgemäßen Homogenisierungsvorrichtung eine quadratisch ausgeleuchtete Fläche 20 erzeugen.

Figur 11 zeigt ebenfalls ein gechirptes Mikrolinsenarray 1 mit einer Vielzahl von Mikrolinsen 1a bis 1e, welche sphärisch oder axialsymmetrisch sind und eine quadratische Umrandung aufweisen. Die Mikrolinsen liegen im hier gezeigten Falle jedoch nicht ungeordnet vor, sondern sind entlang der Breite des Mikrolinsenarrays 1 in x-Richtung entsprechend ihrer Kantenlänge sortiert. Entlang der Länge des Mikrolinsenarrays 1 in γ-Richtung liegen auf einer gegebenen Höhe in x-Richtung Mikrolinsen 1a, 1b, 1c mit gleicher Kantenlänge nebeneinander. Auch die hier gezeigten Mikrolinsen 1a bis 1e erzeugen in einer erfindungsgemäßen Homogenisierungsvorrichtung eine ausgeleuchtete Fläche 20, welche quadratisch ist.

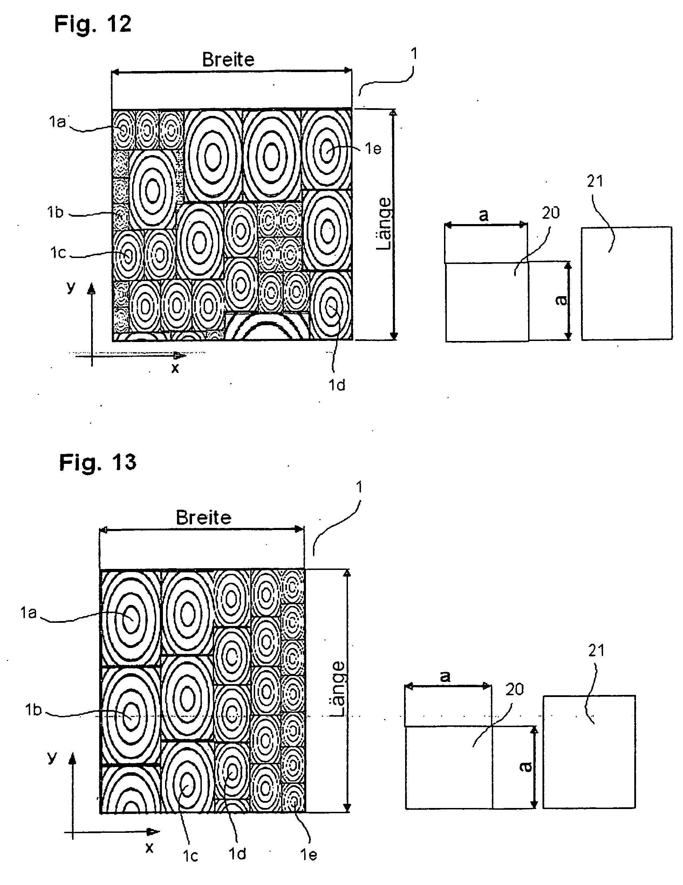

Figur 12 zeigt ein gechirptes Mikrolinsenarray 1 mit einer Vielzahl anamorphotischer Linsen, z.B. elliptischer Linsen 1a bis 1e welche eine rechteckige Linsenumrandung haben. Die Brennweite jeder dieser Linsen 1a bis 1e ist in verschiedenen Richtungen unterschiedlich. Auch die numerische Apertur jeder Einzellinse kann daher in verschiedenen Richtungen unterschiedlich sein. Für die vorliegende Erfindung ist die numerische Apertur jeder Mikrolinse in einer Richtung, z.B. der γ-Richtung, die gleiche. In der senkrechten Richtung kann die numerische Apertur jeder Mikrolinse 1a bis 1e unterschiedlich sein, vorteilhafterweise ist sie jedoch ebenfalls für alle Mikrolinsen identisch. Unterscheidet sich die numerische Apertur der Mikrolinsen 1a bis 1e in der einen Richtung von der numerischen Apertur der Mikrolinsen in der senkrechten Richtung und ist sie in der entsprechenden Richtung für alle Mikrolinsen gleich, so entsteht in einer erfindungsgemäßen Homogenisierungsvorrichtung eine rechteckige ausgeleuchtete Fläche 21. Sind die numerischen Aperturen in beiden Richtungen identisch, so ist die ausgeleuchtete Fläche 20 quadratisch. Ist die Brennweite einer Linse in einer bestimmten Richtung gegeben, so kann die numerische Apertur dieser Linse in der entsprechenden Richtung durch die Ausdehnung dieser Linse in der Richtung angepasst werden.

Figur 13 zeigt ein gechirptes Mikrolinsenarray mit einer Anordnung anamorphotischer oder elliptischer Linsen 1a bis 1e mit rechteckiger Linsenumrandung, welche entlang der Breite in x-Richtung nach ihrer Kantenlängen in x-Richtung geordnet sind und in γ-Richtung für eine gegebene x-Position jeweils die gleiche Kantenlänge in γ-Richtung haben. Wie auch für Figur 12 beschrieben, ist die numerische Apertur jeder Linse 1a bis 1e in zumindest einer Richtung für alle Linsen identisch. Ist sie darüberhinaus auch für die andere Richtung identisch, so entsteht eine rechteckige ausgeleuchtete Fläche 21. Sind darüberhinaus die numerischen Aperturen für beide Richtungen gleich, so ist wiederum die ausgeleuchtete Fläche 20 quadratisch.

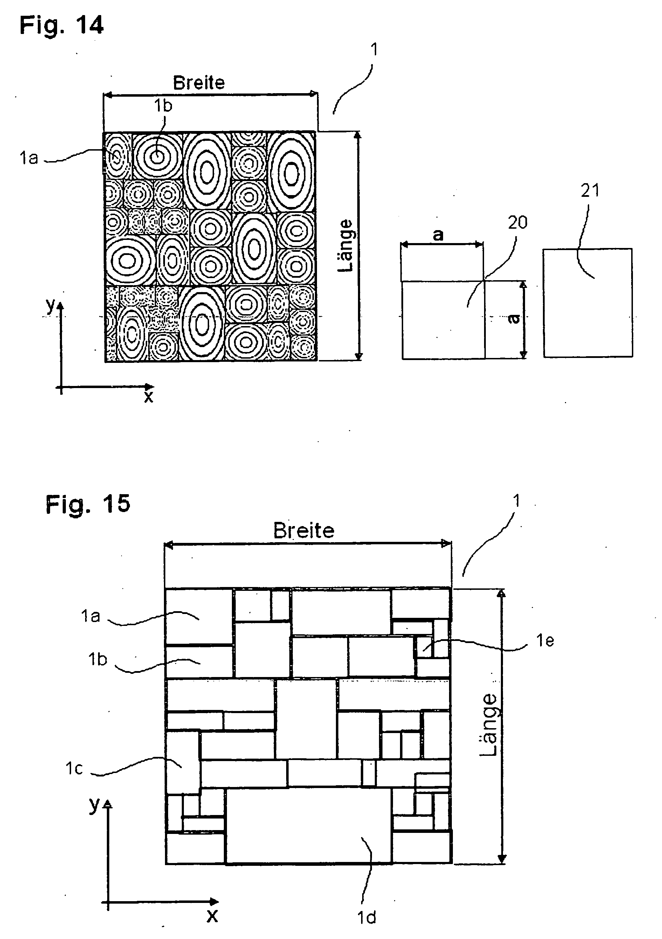

Figur 14 zeigt ein gechirptes Mikrolinsenarray 1 mit einer Mischung von sphärischen Mikrolinsen 1b und anamorphotischen Mikrolinsen 1a. Wiederum haben alle Mikrolinsen 1a, 1b rechteckige Umrandungen. Die numerische Apertur der Mikrolinsen 1a, 1b in einer Richtung ist für alle Mikrolinsen gleich. Vorteilhafterweise ist sie auch in der anderen Richtung für alle Mikrolinsen gleich. Wiederum wird bei unterschiedlichen Brennweiten der Mikrolinsen die numerische Apertur durch die Abmessung der Mikrolinse in der entsprechenden Richtung angepasst. Sphärische Linsen haben in beiden senkrecht zueinander stehenden Richtungen die gleiche Brennweite, sollen sie auch in beide Richtungen die gleiche numerische Apertur haben, so müssen sie folglich quadratisch sein. Entsprechend haben anamorphotische Linsen 1a in zwei senkrechten Richtungen unterschiedliche Brennweiten, zur Einstellung gleicher numerischer Apertur müssen sie daher rechteckig sein. Sind die numerischen Aperturen für beide senkrecht aufeinanderstehenden Richtungen gleich, so ergibt sich eine quadratische, ausgeleuchtete Fläche 20. Sind die numerischen Aperturen nicht gleich, so ist die ausgeleuchtete Fläche 21 rechteckig, aber nicht quadratisch.

Figur 15 zeigt ein gechirptes Mikrolinsenarray 1 mit einer Vielzahl von Zylinderlinsen 1a bis 1e. Zylinderlinsen besitzen nur in einer Richtung optische Brechkraft, sie eignen sich also für eine eindimensionale Homogenisierung. Zweidimensionale Homogenisierungen können durch die Verwendung zweier Arrays erreicht werden, wobei die Zylinderlinsen gekreuzt angeordnet sind. Im gezeigten Beispiel sind die Zylinderachsen aller Zylinderlinsen 1a bis 1e in der gleichen Richtung ausgerichtet. Im gezeigten Beispiel könnte dies die x- oder die γ-Richtung sein. Die Brennweiten der einzelnen Linsen 1a bis 1e sind unterschiedlich. Damit jedoch alle Linsen in der entsprechenden Richtung die gleiche numerische Apertur haben, ist ihre Breite, d.h. der Abstand des Linsenrandes von der Zylinderachse, so angepasst, dass sich für alle Linsen 1a bis 1e die gleiche numerische Apertur ergibt. Im gezeigten Beispiel sind die Zylinderlinsen 1a bis 1e so auf der Fläche des Mikrolinsenarrays 1 angeordnet, dass die Fläche des Mikrolinsenarrays 1 vollständig von Mikrolinsen 1a bis 1e überdeckt wird.

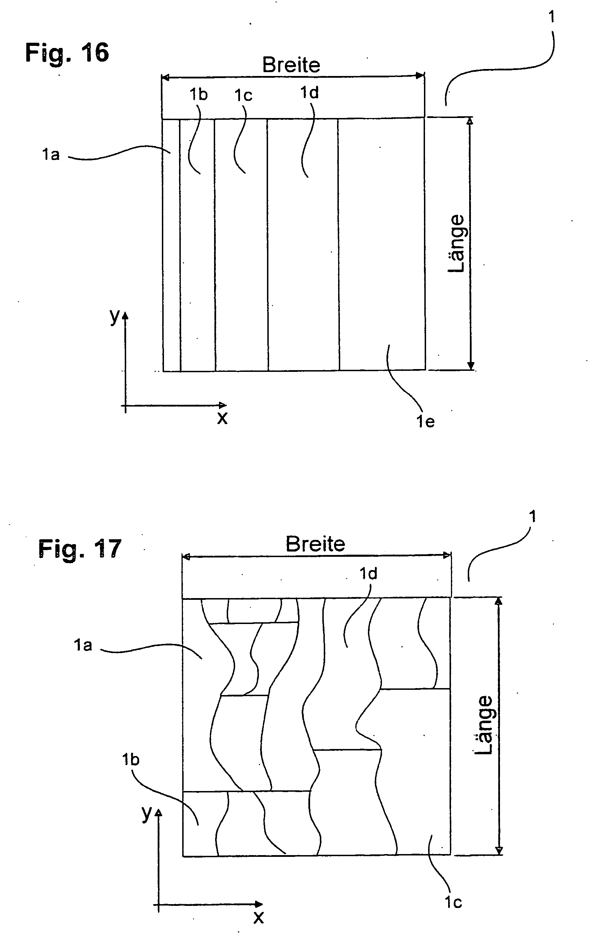

Figur 16 zeigt ein gechirptes Mikrolinsenarray 1 mit einer Vielzahl von Zylinderlinsen 1a bis 1e, deren Länge gleich der Länge des Mikrolinsenarrays 1 ist. Die Zylinderlinsen 1a bis 1e haben eine rechteckige Umrandung und sind mit parallelen Rändern und parallelen Zylinderachsen entlang der Länge, d.h. der γ-Richtung, angeordnet. Da die Zylinderlinsen 1a bis 1e unterschiedliche Brennweiten haben, ist auch ihre Breite in x-Richtung unterschiedlich, so dass sich für alle Zylinderlinsen 1a bis 1e die gleiche numerische Apertur ergibt. Solche Arrays von Zylinderlinsen können mittels Reflow-Technik hergestellt werden, welches eine etablierte Technologie zur Herstellung von Mikrolinsen mit sehr guter optischer Qualität ist.

Figur 17 zeigt ein gechirptes Mikrolinsenarray 1 mit einer Vielzahl von Zylinderlinsen 1a bis 1d, welche mit parallelen in γ-Richtung orientierten Zylinderachsen nebeneinander angeordnet sind. Im Gegensatz zu dem in Figur 15 gezeigten Beispiel haben die Zylinderlinsen 1a bis 1d im hier gezeigten Falle frei geformte Linsenumrandungen. Das heißt, dass sich in γ-Richtung, also in Richtung der Länge des Mikrolinsenarrays 1, die Brennweite und die Breite der Mikrolinse 1a bis 1e ändert, wobei alle Mikrolinsen 1a bis 1d in einer gegebenen Höhe y die gleiche numerische Apertur besitzt. Durch die quasi kontinuierliche Änderung von Breite und Brennweite werden Periodizitäten besser vermieden, so dass Intensitätsschwankungen durch Interferenz besser vermieden werden können.

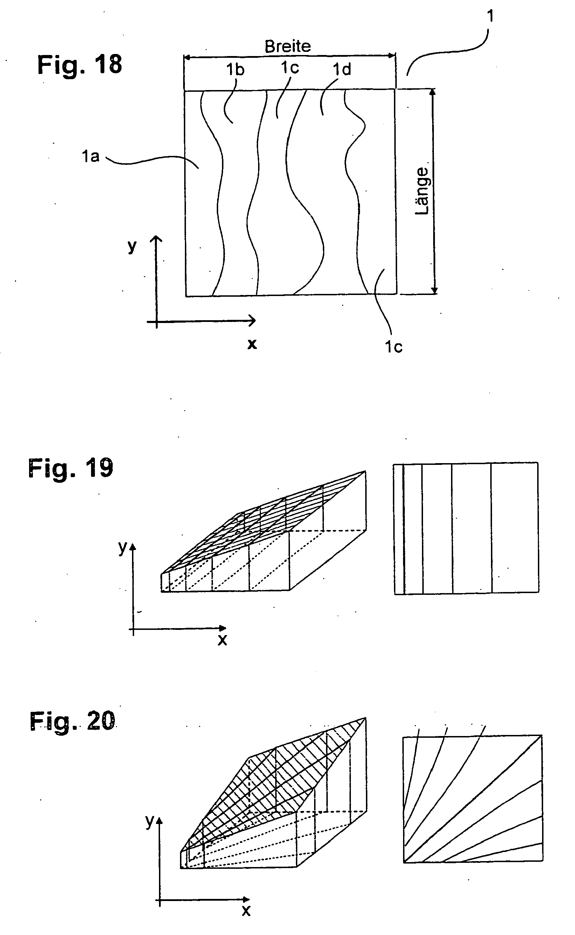

Figur 18 zeigt ein Mikrolinsenarray 1 mit einer Vielzahl von Zylinderlinsen 1a bis 1e, welche mit parallelen Zylinderachsen nebeneinander angeordnet sind. Die Länge der Zylinderlinsen 1a bis 1e ist gleich der Länge des Mikrolinsenarrays 1, d.h. gleich seiner Ausdehnung in γ-Richtung. Die Breite der einzelnen Zylinderlinsen 1a bis 1e ändert sich in Richtung ihrer Zylinderachse, d.h. in Richtung der Länge des Mikrolinsenarrays in γ-Richtung. Um eine konstante numerische Apertur zu erhalten, ändert sich dementsprechend auch die Brennweite der entsprechenden Mikrolinsen in besagter Richtung. Die Breiten der Zylinderlinsen sind so aufeinander abgestimmt, dass die nebeneinander angeordneten Linsen 1a bis 1e die Fläche des Mikrolinsenarrays 1 vollständig überdecken.

Figur 19 zeigt links eine 3D-Darstellung eines Systems mit zwei Mikrolinsenarrays, wobei die Mikrolinsen aus Zylinderlinsen nach Figur 16 bestehen und auf ebenen Substraten angeordnet sind. Die Substrate nehmen dabei einen Winkel zueinander ein. Die Zylinderlinsen sind derart orientiert, dass der Abstand der beiden Substrate entlang der Zylinderachsen konstant ist. Rechts ist die Draufsicht auf das entsprechende Mikrolinsenarray zu sehen, die Figur 16 entspricht.

Figur 20 zeigt links eine 3D-Darstellung eines Systems mit zwei Mikrolinsenarrays, wobei die Mikrolinsen aus Zylinderlinsen nach Figur 18 bestehen und auf ebenen Substraten angeordnet sind. Die Substrate nehmen dabei einen Winkel zueinander ein. Die Zylinderlinsen sind derart orientiert, dass der Abstand der beiden Substrate entlang der Zylinderachsen nicht konstant ist. Rechts ist die Draufsicht auf das entsprechende Mikrolinsenarray zu sehen, die Figur 18 entspricht.

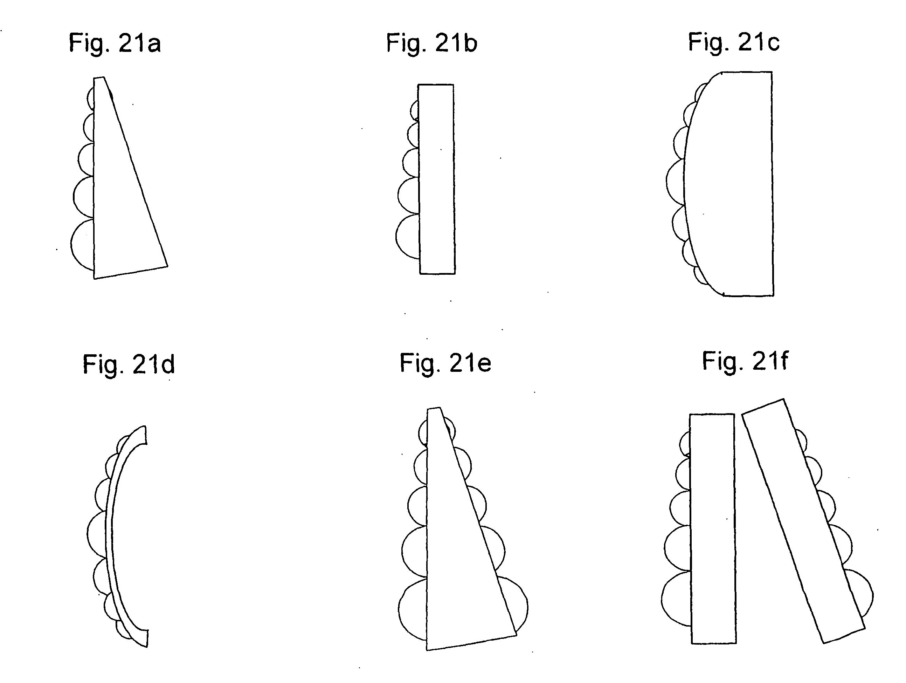

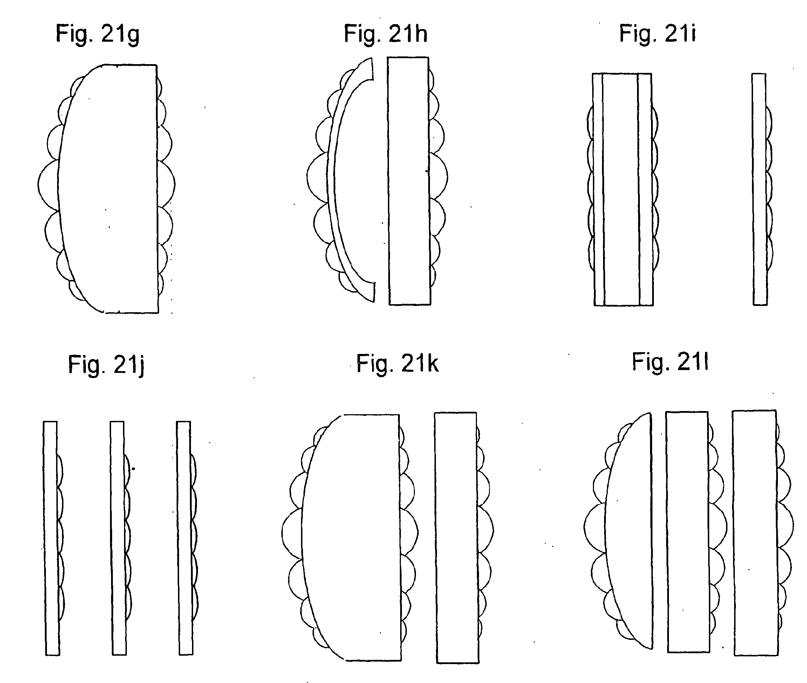

Fig. 21 zeigt beispielhaft verschiedene Ausgestaltungen, wie Mikrolinsenarray und Substrat bzw. Körper ausgeprägt sein können. Hierbei zeigen:
Fig. 21a die Anordnung eines Mikrolinsenarrays auf einem planen Substrat mit zueinander nicht parallelen Oberflächen, wobei das Mikrolinsenarray eine ebene Oberfläche aufweist,
Fig. 21b die Anordnung eines ebenen Mikrolinsenarrays auf einem planen Substrat mit parallelen Oberflächen,
Fig. 21c die Anordnung des Mikrolinsenarrays auf einem Körper mit gekrümmten Oberflächen,
Fig. 21d die Anordnung des Mikrolinsenarrays auf einem gekrümmten Substrat,
Fig. 21e die Anordnung von zwei Mikrolinsenarrays auf zwei zueinander nicht parallelen Oberflächen eines Körpers, z.B. einem Prisma,
Fig. 21f die Anordnung von zwei Substraten mit jeweils darauf angeordnetem ebenem Mikrolinsenarray, wobei die Substrate zueinander beabstandet sind und der Zwischenraum mit Luft oder einem transparenten Material gefüllt ist,
Fig. 21g die Anordnung von zwei Mikrolinsenarrays auf einer planen und einer gekrümmten Oberfläche eines soliden Körpers,
Fig. 21h die Anordnung eines Mikrolinsenarrays auf einem Körper mit gekrümmten Oberflächen und eines zweiten ebenen Mikrolinsenarrays auf einem planen Substrat mit parallelen Oberflächen,
Fig. 21i eine Anordnung aus drei Mikrolinsenarrays, wobei ein planes Substrat mit parallelen Oberflächen an beiden Oberflächen mit Mikrolinsenarrays versehen ist und ein weiteres Mikrolinsenarray auf einem weiteren planen Substrat mit parallelen Oberflächen angeordnet ist,
Fig. 21j eine Anordnung aus drei Mikrolinsenarrays, wobei ein solider Körper mit einer gekrümmten und einer planen Oberfläche an diesen mit einem gekrümmten und einem ebenen Mikrolinsenarray versehen ist und ein weiteres Mikrolinsenarray auf einem planen Substrat mit parallelen Oberflächen angeordnet ist,
Fig. 21l eine Anordnung aus drei Mikrolinsenarrays, wobei ein erstes Mikrolinsenarray auf einem Substrat mit gekrümmter Oberfläche, sowie zwei ebene Mikrolinsenarray auf jeweils einem planen Substrat mit parallelen Oberflächen angeordnet sind.

## Patentansprüche

1. Vorrichtung zur Homogenisierung von Strahlung oder Licht mit zumindest einer Linsenanordnung (7), welche eine Vielzahl von mit parallelen optischen Achsen angeordneten Linsensystemen aufweist, wobei jedes dieser Linsensysteme eine Mikrolinse (7a, 7b, 7c, 7d) ist oder zwei Mikrolinsen (7a, 8a, 7b, 8b, 7c, 8c, 7d, 8d) aufweist, wobei die Linsensysteme zumindest teilweise nicht identisch sind und wobei die nicht identischen Linsensysteme jeweils die gleiche numerische Apertur in einer ersten Richtung parallel zur Hauptebene der Linsensysteme haben, **dadurch gekennzeichnet, dass** die Brennweiten (9a, 9b, 9c, 9d) und/oder die freien Durchmesser und/oder die Kantenlängen in der ersten Richtung und/oder im Falle nicht runder Linsen die Breite in der ersten Richtung und/oder die Krümmungsradien der Linsen der Linsensysteme durch eine Funktion, welche von der Position des Linsensystems in der Linsenanordnung (7) abhängig ist, bestimmt wird.

2. Vorrichtung nach dem vorhergehenden Anspruch, **dadurch gekennzeichnet, dass** die nicht identischen Linsensysteme (7a, 8a, 7b, 8b) in einer zweiten, zur ersten Richtung senkrechten Richtung die gleiche numerische Apertur haben und/oder dass die numerische Apertur der nicht identischen Linsensysteme in der zweiten Richtung die gleiche ist wie in der ersten Richtung.

3. Vorrichtung nach einem der vorhergehenden Ansprüche,
**dadurch gekennzeichnet, dass** die zumindest eine Linsenanordnung ein erstes Mikrolinsenarray (7) ist und die Linsensysteme Mikrolinsen (7a, 7b, 7c, 7d) sind und die Mikrolinsen auf einer Fläche angeordnet sind.

4. Vorrichtung nach dem vorhergehenden Anspruch, **dadurch gekennzeichnet, dass** neben einem ersten Mikrolinsenarray (7) ein zweites Mikrolinsenarray (8), welches eine Vielzahl von mit parallelen optischen Achsen, vorzugsweise auf einer Fläche, angeordneten Mikrolinsen (8a, 8b, 8c, 8d) aufweist, so angeordnet ist, dass die optischen Achsen der Mikrolinsen (7a, 7b, 7c, 7d) des ersten Mikrolinsenarrays die Mikrolinsen des zweiten Mikrolinsenarrays (8a, 8b, 8c, 8d) durchstoßen.

5. Vorrichtung nach dem vorhergehenden Anspruch, **dadurch gekennzeichnet, dass** auf der optischen Achse jeder Mikrolinse (7a, 7b, 7c, 7d) des ersten Mikrolinsenarrays (7) eine Mikrolinse (8a, 8b, 8c, 8d) gleicher Brennweite des zweiten Mikrolinsenarrays (8) so angeordnet ist, dass die optische Achse der jeweiligen Mikrolinse des zweiten Mikrolinsenarrays parallel zur optische Achse der entsprechenden Mikrolinse des ersten Mikrolinsenarrays liegt und der Abstand zwischen den entsprechenden Mikrolinsen gleich ihrer Brennweite ist.

6. Vorrichtung nach Anspruch 1 oder 2,
**dadurch gekennzeichnet, dass** die Linsensysteme jeweils im Strahlengang hintereinander angeordnet eine erste (7a, 7b, 7c, 7d) und eine zweite Mikrolinse (8a, 8b, 8c, 8d) aufweisen, deren optische Achsen zusammenfallen, wobei die ersten Linsen ein erstes Mikrolinsenarray (7) bilden und die zweiten Linsen ein zweites Mikrolinsenarray (8) bilden
und wobei auf der dem ersten Mikrolinsenarray abgewandten Seite des zweiten Mikrolinsenarrays ein drittes Mikrolinsenarray (10) mit einer Vielzahl von Mikrolinsen (10a, 10b 10c, 10d) so angeordnet ist, dass die optischen Achsen der Linsensysteme das dritte Mikrolinsenarray durchstoßen.

7. Vorrichtung nach dem vorhergehenden Anspruch, **dadurch gekennzeichnet, dass** auf der optischen Achse jedes Linsensystems eine Mikrolinse (10a, 10b, 10c, 10d) des dritten Mikrolinsenarrays (10) so angeordnet ist, dass die optische Achse der jeweiligen Mikrolinse des dritten Mikrolinsenarrays parallel zur optischen Achse des entsprechenden Linsensystems liegt, wobei die Mikrolinse des dritten Mikrolinsensystems mit ihrer Hauptebene im Fokus des entsprechenden Linsensystems angeordnet ist.

8. Vorrichtung nach einem der vorhergehenden Ansprüche, **dadurch gekennzeichnet, dass** die Mikrolinsen zweier benachbarter Mikrolinsenarrays auf im Strahlengang hintereinander liegenden Flächen eines Körpers aus einem transparenten Material, insbesondere aus Glas oder einem transparenten Polymer, untergebracht sind.

9. Vorrichtung nach einem der Ansprüche 1 bis 3, **dadurch gekennzeichnet, dass** eine Fourierlinse (2) in Richtung des Strahlenganges hinter der Linsenanordnung mit zu den Hauptebenen der Linsensysteme paralleler Linsenebene so angeordnet ist, dass die optischen Achsen der Linsensysteme die Fourierlinse durchstoßen.

10. Vorrichtung nach einem der Ansprüche 4 bis 8, **dadurch gekennzeichnet, dass** eine Fourierlinse (2) hinter dem zweiten Mikrolinsenarray auf seiner dem ersten Mikrolinsenarray abgewandten Seite mit zu den Linsenebenen der Mikrolinsen des ersten Mikrolinsenarrays paralleler Linsenebene so angeordnet ist, dass die optischen Achsen der Mikrolinsen des zweiten Mikrolinsenarrays die Fourierlinse durchstoßen.

11. Vorrichtung nach einem der Ansprüche 6 bis 8, **dadurch gekennzeichnet, dass** eine Fourierlinse (2) in Richtung des Strahlengangs hinter dem dritten Mikrolinsenarray (10) auf der der Linsenanordnung abgewandten Seite mit zu den Linsenebenen der Mikrolinsen (7a, 7b, 7c, 7d) des ersten Mikrolinsenarrays (7) paralleler Linsenebene so angeordnet ist, dass die optischen Achsen der Mikrolinsen (10a, 10b, 10c, 10d) des dritten Mikrolinsenarrays (10) die Fourierlinse (2) durchstoßen.

12. Vorrichtung nach einem der drei vorhergehenden Ansprüche,
**dadurch gekennzeichnet, dass** die Mikrolinsenarrays (7, 8, 10) in einer Ebene parallel zur Linsenebene der Fourierlinse (2) gemeinsam verschiebbar sind und die Fourierlinse ortsfest ist.

13. Vorrichtung nach einem der vorhergehenden Ansprüche,
**dadurch gekennzeichnet, dass** die Mikrolinsen zumindest eines Mikrolinsenarrays so angeordnet sind, dass in einer Richtung alle Mikrolinsen bzw. Linsensysteme die gleiche Brennweite haben und in einer dazu senkrechten Richtung ihre Brennweite von einem Rand des Mikrolinsenarrays bzw. Linsenanordnung zum anderen Rand monoton zunimmt oder abnimmt.

14. Verfahren zur Homogenisierung von Strahlung, **dadurch gekennzeichnet, dass** die Strahlung auf eine Linsenanordnung mit einer Vielzahl von mit parallelen optischen Achsen angeordneten Linsensysteme gelenkt wird, wobei jedes dieser Linsensysteme eine Mikrolinse ist oder zwei Mikrolinsen aufweist, wobei die Linsensysteme zumindest teilweise nicht identisch sind und wobei die nicht identischen Linsensysteme jeweils die gleiche numerische Apertur in einer ersten Richtung parallel zur Hauptebene der Linsensysteme haben, und wobei die Brennweiten und/oder die freien Durchmesser und/oder die Kantenlängen in der ersten Richtung und/oder im Falle nicht runder Linsen die Breite in der ersten Richtung und/oder die Krümmungsradien der Linsen der Linsensysteme durch eine Funktion, welche von der Position des Linsensystems in der Linsenanordnung abhängig ist, bestimmt wird.

15. Verwendung einer Vorrichtung nach einem der Ansprüche 1 bis 13 zur Homogenisierung von Strahlung.

## Claims

1. Device for the homogenization of radiation or light having at least one lens arrangement (7) which has a large number of lens systems disposed with parallel optical axes, each of said lens system being a microlens (7a, 7b, 7c, 7d) or having two microlenses (7a, 8a, 7b, 8b, 7c, 8c, 7d, 8d), the lens systems being at least partially non-identical, and the non-identical lens systems having respectively the same numerical aperture in a first direction parallel to the main plane of the lens systems, **characterised in that** the focal distances (9a, 9b, 9c, 9d) and/or the free diameters and/or the edge length in the first direction and/or in case of lenses which are not round the width in the first direction and/or the radii of curvature of the lens systems are determined by a function which is dependent upon the position of the lens system in the lens arrangement (7).

2. Device according to the preceding claim, **characterized in that** the non-identical lens systems (7a, 8a, 7b, 8b) have the same numerical aperture in a second direction perpendicular to the first direction and/or that the numerical aperture of the non-identical lens systems is the same in the second direction as in the first direction.

3. Device according to one of the preceding claims, **characterized in that** the at least one lens arrangement is a first microlens array (7) and the lens systems are microlenses (7a, 7b, 7c, 7d) and the microlenses are disposed on a surface.

4. Device according to the preceding claim, **characterized in that** beside a first microlens array (7) a second microlens array (8), which has a large number of micorlenses disposed with parallel optical axes, preferably on a surface, is disposed such that the optical axes of the microlenses (7a, 7b, 7c, 7d) of the first microlens array pass through the microlenses of the second microlens array (8a, 8b, 8c, 8d).

5. Device according to the preceding claim, **characterized in that**, on the optical axis of each microlens (7a, 7b, 7c, 7d) of the first microlens array (7) a microlens (8a, 8b, 8c, 8d) of the same focal lens of the second microlens array is disposed such that the optical axis of the respective microlens of the second microlens array is situated parallel to the optical axis of the corresponding microlens of the first microlens array and the spacing between the corresponding microlenses is equal to their focal distance.

6. Device according to claim 1 or 2, **characterized in that** the lens systems have a first (7a, 7b, 7c, 7d) and a second microlens (8a, 8b, 8c, 8d) respectively disposed in succession in the beam path, the optical axes of which coincide, the first lenses forming a first microlens array (7) and the second lenses forming a second microlens array (8),
and a third mircolens array (10) having a plurality of microlenses (10a, 10b, 10c, 10d) being disposed on the side of the second microlens array orientated away from the first microlens array, such that the optical axis of the lens systems pass through the third microlens array.

7. Device according to the preceding claim, **characterized in that** a microlens (10a, 10b, 10c, 10d) of the third microlens array (10) is disposed on the optical axis of each lens system such that the optical axis of the corresponding microlens of the third microlens array is situated parallely to the optical axis of the corresponding lens system, the microlens of the third microlens system being disposed with the main plane thereof in the focus of the corresponding lens system.

8. Device according to one of the preceding claims, **characterized in that** the microlenses of two adjacent microlens arrays are accommodated on surfaces of a body which are situated in succession in the beam path, said body comprising a transparent material, in particular made from glass or a transparent polymer.

9. Device according to one of claims 1 to 3, **characterized in that** a Fourier lens (2) is disposed in the direction of the beam path behind the lens arrangement with the lens plane parallel to the main planes of the lens systems such that the optical axes of the lens systems pass through the Fourier lens.

10. Device according to one of claims 4 to 8, **characterized in that** a Fourier lens (2) is disposed behind the second microlens array on the side thereof orientated away from the first microlens array with the lens plane parallel to the lens planes of the microlenses of the first microlens array such that the optical axes of the microlenses of the second microlens array pass through the Fourier lens.

11. Device according to one of claims 6 to 8, **characterized in that** a Fourier lens (2) is disposed in the direction of the beam path behind the third microlens array (10) on the side orientated away from the lens arrangement with the lens plane parallel to the lens planes of the microlenses (7a, 7b, 7c, 7d) of the first microlens array (7) such that the optical axes of the microlenses (10a, 10b, 10c, 10d) of the third microlens array (10) pass through the Fourier lens (2).

12. Device according to one of the three preceding claims, **characterized in that** the microlens arrays (7, 8, 10) can be displaced together in a plane parallel to the lens plane of the Fourier lens (2) and the Fourier lens is stationary.

13. Device according to one of the preceding claims, **characterized in that** the microlenses at least of one microlens array are disposed such that all the microlenses or lens systems in one direction have the same focal distance and, in a direction perpendicular thereto, their focal distance increases or decreases monotonically from one edge of the microlens array or lens arrangements to the other edge.

14. Method for the homogenization of radiation, **characterized in that** the radiation is deflected to a lens array with a plurality of lens systems being arranged with parallel optical axes, each of said lens systems being a microlens or having two microlenses, the lens systems being at least partially non-identical and the non-identical lens systems respectively having the same numerical aperture in a first direction parallel to the main plane of the lens system, the focal distances and/or the free diameters and/or the edge lengths in the first direction and/or in case of not round lenses the widths in the first direction and/or the radii of curvature of the lenses of the lens systems is determined by a function which is dependent upon the position of the lens system in the lens arrangement.

15. Use of a device according to claims 1 to 13 for the homogenization of radiation.

## Revendications

1. Dispositif d'homogénéisation d'un rayonnement ou de lumière avec au moins un agencement de lentilles (7), qui présente une pluralité de systèmes de lentilles agencés avec des axes optiques parallèles, dans lequel chacun de ces systèmes de lentilles est une microlentille (7a, 7b, 7c, 7d) ou comporte deux microlentilles (7a, 8a, 7b, 8b, 7c, 8c, 7d, 8d), dans lequel les systèmes de lentilles ne sont pas, au moins en partie, identiques et dans lequel les systèmes de lentilles non identiques ont respectivement la même ouverture numérique dans une première direction parallèle au plan principal des systèmes de lentilles,
**caractérisé en ce que** l'on détermine les distances focales (9a, 9b, 9c, 9d) et/ou les diamètres libres et/ou les longueurs d'arêtes dans la première direction et/ou, dans le cas de lentilles non rondes, la largeur dans la première direction et/ou les rayons de courbure des lentilles des systèmes de lentilles par une fonction, laquelle est dépendante de la position du système de lentilles dans l'agencement de lentilles (7).

2. Dispositif selon la revendication précédente,
**caractérisé en ce que** les systèmes de lentilles non identiques (7a, 8a, 7b, 8b) dans une seconde direction perpendiculaire à la première direction ont la même ouverture numérique et/ou **en ce que** l'ouverture numérique des systèmes de lentilles non identiques dans la seconde direction est la même que celle dans la première direction.

3. Dispositif selon l'une quelconque des revendications précédentes,
**caractérisé en ce que** le au moins un agencement de lentilles est un premier réseau de microlentilles (7) et **en ce que** les systèmes de lentilles sont des microlentilles (7a, 7b, 7c, 7d) et **en ce que** les microlentilles sont agencées sur une surface.

4. Dispositif selon la revendication précédente,
**caractérisé en ce qu'**un deuxième réseau de microlentilles (8), qui présente une pluralité de microlentilles (8a, 8b, 8c, 8d) agencées avec des axes optiques parallèles, de préférence sur une surface, est agencé à côté d'un premier réseau de microlentilles (7) de sorte que les axes optiques des microlentilles (7a, 7b, 7c, 7d) du premier réseau de microlentilles passent à travers les microlentilles du deuxième réseau de microlentilles (8a, 8b, 8c, 8d).

5. Dispositif selon 1a revendication précédente,
**caractérisé en ce qu'**on agence sur l'axe optique de chaque microlentille (7a, 7b, 7c, 7d) du premier réseau de microlentilles (7) une microlentille (8a, 8b, 8c, 8d) de même distance focale du deuxième réseau de microlentilles (8) de sorte que l'axe optique de la microlentille respective du deuxième réseau de microlentilles soit parallèle à l'axe optique de la microlentille correspondante du premier réseau de microlentilles et que la distance entre les microlentilles correspondantes soit égale à leur distance focale.

6. Dispositif selon la revendication 1 ou 2,
**caractérisé en ce que** les systèmes de lentilles présentent, agencées l'une derrière l'autre sur le trajet des rayons, une première (7a, 7b, 7c, 7d) et une seconde microlentilles (8a, 8b, 8c, 8d), dont les axes optiques coïncident, dans lequel les premières lentilles forment un premier réseau de microlentilles (7) et les secondes lentilles forment un deuxième réseau de microlentilles (8) et dans lequel on agence sur le côté, du deuxième réseau de microlentilles, opposé au premier réseau de microlentilles, un troisième réseau de microlentilles (10) avec une pluralité de microlentilles (10a, 10b, 10c, 10d), de sorte que les axes optiques des systèmes de lentilles passent à travers le troisième réseau de microlentilles.

7. Dispositif selon la revendication précédente,
**caractérisé en ce qu'**on agence sur l'axe optique de chaque système de lentille une microlentille (10a, 10b, 10c, 10d) du troisième réseau de microlentilles (10) de sorte que l'axe optique de la microlentille respective du troisième réseau de microlentilles soit parallèle à l'axe optique du système de lentille correspondant, et dans lequel la microlentille du troisième système de microlentilles est agencée avec son plan principal dans le foyer du système de lentilles correspondant.

8. Dispositif selon l'une quelconque des revendications précédentes,
**caractérisé en ce que** les microlentilles de deux réseaux de microlentilles adjacents sont logées sur des surfaces d'un corps en matériau transparent, en particulier en verre ou en polymère transparent, lesquelles surfaces sont situées l'une derrière l'autre sur le trajet des rayons.

9. Dispositif selon l'une quelconque des revendications 1 à 3,
**caractérisé en ce qu'**une lentille de Fourier (2) est agencée dans la direction du trajet des rayons et derrière l'agencement de lentilles avec un plan de lentille parallèle aux plans principaux des systèmes de lentilles de sorte que les axes optiques des systèmes de lentilles passent à travers la lentille de Fourier.

10. Dispositif selon l'une quelconque des revendications 4 à 8,
**caractérisé en ce qu'**une lentille de Fourier (2) est agencée derrière le deuxième réseau de microlentilles sur son côté opposé au premier réseau de microlentilles avec un plan de lentilles parallèle aux plans des microlentilles du premier réseau de microlentilles de sorte que les axes optiques des microlentilles du deuxième réseau de microlentilles passent à travers la lentille de Fourier.

11. Dispositif selon l'une quelconque des revendications 6 à 8,
**caractérisé en ce qu'**une lentille de Fourier (2) est agencée dans la direction du trajet des rayons derrière le troisième réseau de microlentilles (10) sur le côté opposé à l'agencement de lentilles avec un plan de lentilles parallèle aux plans des microlentilles (7a, 7b, 7c, 7d) du premier réseau de microlentilles (7), de sorte que les axes optiques des microlentilles (10a, 10b, 10c, 10d) du troisième réseau de microlentilles (10) passent à travers la lentille de Fourier (2).

12. Dispositif selon l'une quelconque des trois revendications précédentes,
**caractérisé en ce que** les réseaux de microlentilles (7, 8, 10) sont déplaçables ensemble dans un plan parallèle au plan de la lentille de Fourier (2) et **en ce que** la lentille de Fourier demeure fixe.

13. Dispositif selon l'une quelconque des revendications précédentes,
**caractérisé en ce que** les microlentilles d'au moins un réseau de microlentilles sont agencées de sorte que, dans une direction, toutes les microlentilles, respectivement tous les systèmes de lentilles, aient la même distance focale et que, dans une direction perpendiculaire à cette direction, leur distance focale croisse ou décroisse de façon monotone d'un bord du réseau de microlentilles, respectivement de l'agencement de lentilles, à l'autre bord.

14. Procédé d'homogénéisation d'un rayonnement,
**caractérisé en ce que** le rayonnement est dévié vers un agencement de lentilles comportant une pluralité de systèmes de lentilles agencés avec des axes optiques parallèles, dans lequel chacun de ces systèmes de lentilles est une microlentille ou comporte deux microlentilles, dans lequel les systèmes de lentilles ne sont pas, au moins en partie, identiques et dans lequel les systèmes de lentilles non identiques ont respectivement la même ouverture numérique dans une première direction parallèle au plan principal des systèmes de lentilles et dans lequel les distances focales et/ou les diamètres libres et/ou les longueurs d'arêtes dans la première direction et/ou, dans le cas de lentilles non rondes, la largeur dans la première direction et/ou les rayons de courbure des lentilles des systèmes de lentilles est ou sont déterminés par une fonction, laquelle est dépendante de la position du système de lentilles dans l'agencement de lentilles.

15. Utilisation d'un dispositif selon l'une quelconque des revendications 1 à 13 pour l'homogénéisation d'un rayonnement.
